(19) Europäisches Patentamt
European Patent Office
Office européen des brevets

(11) EP 0 869 146 A1

(12) EUROPEAN PATENT APPLICATION
published in accordance with Art. 158(3) EPC

(43) Date of publication:
**07.10.1998 Bulletin 1998/41**

(21) Application number: **97944181.3**

(22) Date of filing: **20.10.1997**

(51) Int. Cl.[6]: **C08L 23/08**

(86) International application number:
**PCT/JP97/03783**

(87) International publication number:
**WO 98/17721 (30.04.1998 Gazette 1998/17)**

(84) Designated Contracting States:
**DE FR GB IT NL**

(30) Priority: **23.10.1996 JP 280741/96**
**03.03.1997 JP 48289/97**

(71) Applicant:
**Mitsui Chemicals, Inc.**
**Tokyo 100 (JP)**

(72) Inventors:
- **OKADA, Keiji**
  **Kuga-gun,Yamaguchi 740 (JP)**
- **TAKIMOTO, Kazuyuki**
  **Kuga-gun,Yamaguchi 740 (JP)**
- **MATSUMOTO, Tetsuhiro**
  **Kuga-gun,Yamaguchi 740 (JP)**
- **MORIZONO, Ken-ichi**
  **Kuga-gun,Yamaguchi 740 (JP)**

(74) Representative:
**Cresswell, Thomas Anthony et al**
**J.A. KEMP & CO.**
**14 South Square**
**Gray's Inn**
**London WC1R 5LX (GB)**

# (54) ETHYLENE COPOLYMER COMPOSITION AND MOLDINGS

(57) The present invention provides a copolymer composition based on ethylene which exhibits an adequate extensible flexibility and an ability for adhering onto various surfaces and which is superior in the transparency, strength, restorability from strain, blocking resistance and processibility and has no content of chlorine, as well as formed products made thereof, such as films, sheets, pipes and tubes, wherein said copolymer composition comprises

(A) 10 - 90 % by weight of a copolymer of ethylene with an aromatic vinyl compound and/or an $\alpha$ - olefin, which has a degree of crystallinity of at least 10 % but less than 90 % and an intrinsic viscosity $[\eta_A]$ of 1 - 10 dl/g and
(B) 10 - 90 % by weight of a homopolymer of ethylene or a copolymer of ethylene with an aromatic vinyl compound and/or an $\alpha$ -olefin, which has a degree of crystallinity higher than 10 % but not higher than 90 % and an intrinsic viscosity $[\eta_B]$ of 0.1 - 2 dl/g

wherein at least one of the above ethylenic copolymer (A) and the ethylenic polymer (B) has the copolymerized aromatic vinyl compound and wherein the ratio of [degree of crystallinity of (A)/degreee of crystallinity of (B)] is less than 1 and the ratio of $[\eta_A]/[\eta_B]$ is greater than 1.

EP 0 869 146 A1

## Description

### FIELD OF THE TECHNIQUE

The present invention relates to a copolymer composition based on ethylene which comprises an ethylenic copolymer of higher molecular weight having a relatively lower degree of crystallinity and an ethylenic polymer or copolymer of lower molecular weight having a relatively higher degree of crystallinity, as well as to a formed product, such as film, sheet, pipe or tube, made of such composition.

### BACKGROUND OF THE TECHNIQUE

For films and sheets to be used for agricultural, industrial and other purposes, they are requested to exhibit an adequate extensible flexibility and ability for adhering onto various surfaces as well as to be excellent in the strength, blocking resistance (antiblocking), restorability from strain and transparency and, in addition, it is required that the inside faces of such films and sheets should not suffer from fogging (fogging resistance) and such a fogging resistance should be preserved for a long term (durable fogging resistance). Similar properties are also required for pipes and tubes for use in pipe lines and for medical uses.

In the past, polymeric materials based on polyvinyl chloride have been employed for such films, sheets, pipes and tubes. While the polymeric materials based on polyvinyl chloride have many superior performances, materials having no chlorine content have recently become required in view of the environmental protection.

Although films, sheets, pipes and tubes made of a linear low density copolymer resin based on ethylene/$\alpha$-olefin have been known, they are requested to be further improved in the strength, strain restorability, blocking resistance and durable fogging resistance.

One object of the present invention is to provide a copolymer composition based on ethylene which exhibits balanced material properties, such as an adequate extensible flexibility and ability for adhering onto various surfaces, together with excellences in the transparency, strength, strain restorability, blocking resistance and processibility.

Another object of the present invention is to provide a formed product, such as film, sheet, pipe or tube which is made of the above-mentioned composition and which exhibits balanced material properties, such as an adequate extensible flexibility and ability for adhering onto various surfaces and is superior in the transparency, strength, restorability from strtain and blocking resistance.

### DISCLOSURE OF THE INVENTION

The copolymer composition based on ethylene according to the present invention comprises

(A) 10 - 90 % by weight of a copolymer of ethylene with an aromatic vinyl compound and/or an $\alpha$ - olefin having 3 - 20 carbon atoms, which has a degree of crystallinity not lower than 10 % but less than 90 % and an intrinsic viscosity [$\eta_A$] of 1 - 10 dl/g, determined in decahydronaphthalene at 135°C and
(B) 10 - 90 % by weight of a homopolymer of ethylene or a copolymer of ethylene with an aromatic vinyl compound and/or an $\alpha$ -olefin having 3 - 20 carbon atoms, which has a degree of crystallinity higher than 10 % but not higher than 90 % and an intrinsic viscosity [$\eta_B$] of 0.1 - 2 dl/g, determined in decahydronaphthalene at 135 °C,

wherein either one or both of the above ethylenic copolymer (A) and the ethylenic polymer (B) have the copolymerized aromatic vinyl compound and wherein the ratio of the degree of crystallinity of the ethylenic copolymer (A) to the degree of crystallinity of the ethylenic polymer (B), [degree of crystallinity of (A)/ that of (B)] is lower than 1 and the ratio of the intrinsic viscosity of the ethylenic copolymer (A) to that of the ethylenic polymer (B) 〔 [$\eta_A$]/[$\eta_B$] 〕 is greater than 1.

The formed product according to the present invention, which include film, sheet, pipe and tube, is obtained by forming the copolymer composition based on ethylenic given above.

The ethylenic copolymer (A) to be employed according to the present invention is a copolymer of ethylene with an aromatic vinyl compound and/or an $\alpha$ - olefin having 3 - 20 carbon atoms, which has a degree of crystallinity of not lower than 10 % but less than 90 %, preferably 10 - 70 %, more preferably 10 - 45 %, most preferably 15 - 45 %, and an intrinsic viscocity [ $\eta_A$] of 1 - 10 dl/g, preferably 1.5 - 3.8 dl/g, determined in decahydronaphthalene at 135 °C. When the degree of crystallinity is in the above range, a composition superior in the flexibility, transparency and shock resistance is obtained. When the intrinsic viscosity [$\eta_A$] is in the above range, a composition superior in the processibility is obtained.

For the aromatic vinyl compound, there may be exemplified styrene; mono- and polyalkylstyrenes, such as, o-methylstyrene, m-methylstyrene, p-methylstyrene, o,p-dimethylstyrene, o-ethylstyrene, m-ethylstyrene and p-ethylstyrene; functional group-containing derivatives of styrene, such as, methoxystyrene, ethoxystyrene, vinyl benzoate, methyl vinyl

benzoate, vinyl benzyl acetate, hydroxystyrene, o-chlorostyrene, p-chlorostyrene and divinylbenzene; and others including 3-phenylpropylene, 4-phenylbutene and $\alpha$ -methylstyrene. They may be employed either alone or in a combination of two or more of them. For the aromatic vinyl compound, styrene is preferred.

As the $\alpha$ -olefin, there may be exemplified those which have 3 - 20 carbon atoms, such as propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. They may be used either alone or in combination of two or more of them. For the $\alpha$ -olefin, those which have 3 - 10 carbon atoms, such as 1-hexene, 1-octene and 4-methyl-1-pentene, are preferred.

The ethylene content in the ethylenic copolymer (A), namely, the content of the structural unit derived from ethylene may favorably be 75 - 98.6 mole %, preferably 80 - 98.6 mole %. The content of the $\alpha$ - olefin, namely, the content of the structural unit derived from the $\alpha$ -olefin having 3 - 20 carbon atoms may favorably be 0 - 15 mole %, preferably 0 - 10 mole %.

In case a copolymer having the copolymerized aromatic vinyl compound, it is favorable to employ, as the ethylenic copolymer (A), a copolymer having a content of the aromatic vinyl compound, i.e., content of the structural unit derived from the aromatic vinyl compound, in the range of 1.4 - 10 mole %, preferably 1.4 - 4 mole %. When the content of the aromatic vinyl compound is in the above range, a composition having balanced properties among fogging resistance, strain restorability and mechanical strength is obtained.

As the ethylenic copolymer (A) to be employed according to the present invention, those which have a molecular weight distribution represented by the ratio ($M_w/M_N$) of the weight average molecular weight ($M_w$) to the number average molecular weight ($M_N$) is in the range of 2 - 10, preferably 2.5 - 6 and the temperature (Tm) at the maximum peak in the endothermic curve obtained using a differential scanning calorimeter is in the range from 115 to 60°C , preferably in the range from 115 to 85 °C . When the molecular weight distribution ($M_w/M_N$) is in the above range, a composition superior in the processibility is obtained. When the temperature (Tm) at the maximum peak in the endothermic curve is in the above range, a composition superior in the balance between the heat resistance and the transparency is obtained.

In the case of using a copolymer having the copolymerized aromatic vinyl compound for the ethylenic copolymer (A), those in which the proportion of the structural unit constituting the chained structure composed of successive two or more of the structural unit derived from the aromatic vinyl compound (in the following, referred to sometimes as "aromatic vinyl compound/aromatic vinyl compound chained structure"), which may sometimes be referred to in the following as "the content of the aromatic vinyl compound/aromatic vinyl compound chained structure", is not higher than 1 %, preferably not higher than 0.1 %, based on the total number of the structural units derived from the aromatic vinyl compound, are preferred. The content of the aromatic vinyl compound/aromatic vinyl compound chained structure can be determined using $^{13}C$ NMR.

The ethylenic polymer (B) is a homopolymer of ethylene or a copolymer of ethylene with an aromatic vinyl compound and/or a $\alpha$ -olefin having 3 - 20 carbon atoms, which has a degree of crystallinity in the range of higher than 10 % but not higher than 90 %, preferably 30 - 80 %, more preferably 35 - 70 %, especially preferably 40 - 65 %, and an intrinsic viscosity [$\eta_B$] in the range of 0.1 - 2 dl/g, preferably 0.5 - 1.5 dl/g, determined in decahydronaphthalene at 135 °C . When the degree of crystallinity is in the above range, a composition superior in the balance between the heat resistance and the transparency is obtained. When the intrinsic viscosity [$\eta_B$] is in the above range, a composition superior in the processibility is obtained.

As the aromatic vinyl compound and as the $\alpha$ - olefin, those which have been exemplified for the comonomer of the ethylenic copolymer (A) may be exemplified.

The content of ethylene in the ethylenic polymer (B), namely, the content of the structural unit derived from ethylene may favorably amount to 83.6 - 100 mole %, preferably 88.6 - 100 mole %. The content of the $\alpha$ -olefin having 3 - 20 carbon atoms, namely the content of the structural unit derived from the $\alpha$ - olefin may favorably amount to 0 - 15 mole %, preferably to 0 - 10 mole %.

In the case of using, as the ethylenic polymer (B), a copolymer containing the copolymerized aromatic vinyl compound, it is preferable to use a copolymer having a content of the aromatic vinyl compound, namely, a content of the structural unit derived from the aromatic vinyl compound, in the range of 0.05 - 1.4 mole %, preferably 0.07 - 1.2 mole %. When the content of the aromatic vinyl compound is in the above range, a composition superior in the heat resistance is obtained.

For the ethylenic polymer (B), a high density polyethylene having a density higher than 0.93 g/cm$^3$ and not higher than 0.97 g/cm$^3$ may favorably be used. Here, the high density polyethylene encompasses a homopolymer of ethylene and a copolymer of ethylene with a small proportion, i.e. below about 5 mole %, of another $\alpha$ -olefin, such as propylene. Among these high density polyethylenes, those which have a melt flow rate (190 °C ) of 0.01 - 1 g/10 min. and a density of 0.94 - 0.97 g/cm$^3$ are preferred.

As the ethylenic polymer (B), there may also be used favorably linear low density polyethylenes including copolymers of ethylene with another $\alpha$ -olefin of 3 - 8 carbon atoms having densities of 0.86 - 0.93 g/cm$^3$.

For the ethylenic polymer (B) to be used according to the present invention, those in which the molecular weight distribution expressed by the ratio ($M_w/M_N$) of the weight average molecular weight ($M_w$) to the number average molecular weight ($M_N$) is in the range of 2 - 10, preferably 2.5 - 6, and the temperature (Tm) at the maximum peak in the endothermic curve obtained using a differential scanning calorimeter (DSC) is in the range of 125 - 115°C , preferably 125 - 120°C are preferred. When the molecular weight distribution ($M_w/M_N$) is in the above range, a composition superior in the processibility is obtained. When the temperature (Tm) at the maximum peak in the endothermic curve obtained by a differential scanning calorimeter is in the above range, a composition superior in the balance between the heat resistance and the transparency is obtained.

In the case of using, as the ethylenic polymer (B), a copolymer containing the copolymerized aromatic vinyl compound, it is preferable to use a coplolymer having a content of the chained structure of aromatic vinyl compound/aromatic vinyl compound structural units not higher than 1 %, preferably not higher than 0.1 %.

The composition according to the present invention comprises the ethylenic copolymer component (A) and the ethylenic polymer component (B) as defined above, wherein such a composition that has a content of the copolymerized aromatic vinyl compound in at least one of these components is preferable for being used. Thus, three combinations of the components (A) and (B) are possible for the composition, namely, a combination in which both the components (A) and (B) are constituted of an ethylenic copolymer having a content of the copolymerized aromatic compound, a combination in which only the component (A) is an ethylenic copolymer having a content of the copolymerized aromatic vinyl compound and a combination in which only the component (B) is an ethylenic copolymer having a content of the copolymerized aromatic vinyl compound.

The component (A) and the component (B) are incorporated in such a proportion that the ratio of the degree of crystallinity of the ethylenic copolymer (A) to that of the ethylenic polymer (B) namely, [degree of crystallinity of (A)]/[degree of crystallinity of (B)], 〔which is hereinafter sometimes referred to as "the crystallinity ratio"〕 is lower than 1 preferably not higher than 0.9, preferably not higher than 0.8, more preferably not higher than 0.7, with usual range being at least 0.1 and less than 1, and the ratio of the intrinsic viscosity of the component (A) to that of the component (B) namely, $[\eta_A]/[\eta_B]$, 〔which is hereinafter sometimes referred to as the "intrinsic viscosity ratio"〕 is greater than 1, preferably 1.5 - 100, more preferably 1.5 - 30.

The blending proportion of the the components (A) and (B) in the composition according to the present invention may be in the range of 10 - 90 % by weight, preferably 30 - 70 % by weight, of the component (A) and 10 - 90 % by weight, preferably 30 - 70 % by weight, of the component (B).

By blending the ethylenic copolymer (A) which has a relatively lower degree of crystallinity and a higher molecular weight with the ethylenic polymer (B) which has a relatively higher degree of crystallinity and a lower molecular weight according to the present invention, a copolymer composition based on ethylene which has an adequate extensible flexibility and an ability for adhering onto various surfaces and is superior in the transparency, in the strengths, such as shock resistance and so on, in the strain restorability, in the blocking resistance and in the processibility, such as the stability of blown balloon upon its processing can be obtained.

Preferable copolymer compositions based on ethylene according to the present invention include:

1) A copolymer composition based on ethylene, comprising

(A1) 10 - 90 % by weight, preferably 30 -70 % by weight of a copolymer of ethylene with an aromatic vinyl compound and/or an $\alpha$ -olefin having 3 - 20 carbon atoms, which has a degree of crystallinity of 10 - 45 %, preferably 15 - 45 % and an intrinsic viscosity $[\eta_{A1}]$ of 1 - 10 dl/g, preferably 1.5 - 3.8 dl/g, determined in decahydronaphthalene at 135 °C , and

(B1) 10 - 90 % by weight, preferably 30 - 70 % by weight of a copolymer of ethylene with an aromatic vinyl compound and/or an $\alpha$ -olefin having 3 - 20 carbon atoms, which has a degree of crystallinity in the range of 35 - 70 %, preferably 40 - 65 % and an intrinsic viscosity $[\eta_{B1}]$ of 0.1 - 2 dl/g, preferably 0.5 - 1.5 dl/g, determined in decahydronaphthalene at 135 °C,

wherein either one or both of the above ethylenic copolymer (A1) and the ethylenic copolymer (B1) have the copolymerized aromatic vinyl compound and wherein the ratio of the degree of crystallinity of the ethylenic copolymer (A1) to that of the ethylenic copolymer (B1) [degree of crystallinity of (A1)/that of (B1)] is lower than 1, preferably not higher than 0.9, and the ratio of the intrinsic viscosity of the ethylenic copolymer (A1) to that of the ethylenic copolymer (B1) $[\eta_{A1}]/[\eta_{B1}]$ is greater than 1, preferably 1.5 - 100, more preferably 1.5 - 30.

2) A composition of above 1), wherein the component (A1) is a copolymer of ethylene and an aromatic vinyl compound and the component (B1) is a copolymer of ethylene and an aromatic vinyl compound.

3) A composition of above 1), wherein the component (A1) is a copolymer of ethylene with an $\alpha$ -olefin and the component (B1) is a copolymer of ethylene with an aromatic vinyl compound.

4) A copolymer composition based on ethylene, comprising

(A2) 10 - 90 % by weight, preferably 30 - 70 % by weight of a copolymer of ethylene with an aromatic vinyl compound and optionally with another α -olefin, which has a degree of crystallinity of 10 - 45 %, preferably 15 - 45 %, and an intrinsic viscosity [$\eta_{A2}$] of 1 - 10 dl/g, preferably 1.5 - 3.8 dl/g, determined in decahydronaphthalene at 135 °C , and

(B2) 10 - 90 % by weight, preferably 30 - 70 % by weight of a homopolymer of ethylene or a copolymer of ethylene with an α -olefin having 3 - 20 carbon atoms, which has a degree of crystallinity of 35 - 70 %, preferably 40 - 65 %, and an intrinsic viscosity [$\eta_{B2}$] of 0.1 - 2 dl/g, preferably 0.5 - 1.5 dl/g, determined in decahydronaphthalene at 135 °C ,

wherein the ratio of the degree of crystallinity of the ethylenic copolymer (A2) to that of the ethylenic polymer (B2) [degree of crystallinity of (A2)/that of (B2)] is lower than 1, preferably not higher than 0.9, and the ratio of the intrinsic viscosity of the ethylenic copolymer (A2) to that of the ethylenic polymer (B2) [$\eta_{A1}$]/[$\eta_{B1}$] is greater than 1, preferably 1.5 - 100, more preferably 1.5 - 30.

5) A composition of above 1) to 4), wherein an anti-fogging agent (C) and/or a nucleating agent (D) is compounded in the composition in an amount of 0.01 - 10 parts by weight, preferably 0.3 - 5 parts by weight per 100 parts by weight of the sum of the components (A) and (B).

The composition having compounded therein an anti-fogging agent (C) and/or a nucleating agent (D) is furthermore favorable, since a further transparency, fogging resistance and a durable fogging resistance are imparted to the composition.

It is preferable for the compositions of above 1) to 5) that the content of ethylene, content of the aromatic vinyl compound, content of the α -olefin, molecular weight distribution, Tm, content of the aromatic vinyl compound/aromatic vinyl compound chained structural units and so on of the component (A1) or (A2) are the same as those of the component (A). It is also preferable that the content of ethylene, content of the α -olefin, content of the aromatic vinyl compound, molecular weight distribution, Tm, content of the aromatic vinyl compound/aromatic vinyl compound chained structural units and so on of the component (B1) or (B2) are the same as those of the component (B).

Concrete examples of the composition of above 1) include a composition composed of, on the one hand, 30 - 70 % by weight of an ethylene/aromatic vinyl compound copolymer (A1) which is obtained by co-polymerizing ethylene with an aromatic vinyl compound, such as styrene or the like, in a proportion of 90 - 98.6 mole % of the former and 1.4 - 10 mole % of the latter, and, on the other hand, 30 - 70 % by weight of an ethylene/aromatic vinyl compound copolymer (B1) which is obtained by co-polymerizing ethylene with an aromatic vinyl compound, such as styrene or the like, in a proportion of 98.6 - 99.5 mole % of the former and 0.65 - 1.4 mole % of the latter; and a composition composed of, on the one hand, 30 - 70 % by weight of an ethylene/α -olefin copolymer (A1) which is obtained by co-polymerizing ethylene with an α -olefin, in a proportion of 85 - 98.6 mole % of the former and 1.4 - 15 mole % of the latter, and, on the other hand, 30 - 70 % by weight of the above mentioned ethylene/aromatic vinyl compound copolymer (B1). It is one of preferable modes that both the components (A1) and (B1) have the copolymerized aromatic vinyl compound in the composition of above 1).

As a concrete example of the composition of above 4), there may be enumerated a composition composed of, on the one hand, 10 - 40 % by weight of an ethylene/aromatic vinyl compound copolymer (A2) which is obtained by co-polymerizing ethylene with an aromatic vinyl compound, such as styrene or the like, in a proportion of 90 - 98.6 mole % of the former and 1.4 - 10 mole % of the latter and, on the other hand, 90 - 60 % by weight of an ethylene homopolymer (B2) which is a high density polyethylene having a density higher than 0.93 $g/cm^3$ and not higher than 0.97 $g/cm^3$ or a copolymer (B2) which is a low density linear polyethylene having a density of 0.86 - 0.93 $g/cm^3$ and which is obtained by co-polymerizing ethylene with an α -olefin having 3 - 8 carbon atoms, in a proportion of 90 - 97 mole % of the former and 3 - 10 mole % of the latter.

The compositions of above 1) to 3) according to the present invention, in particular, those in which both the components (A) and (B) have the coplymerized aromatic vinyl compound are useful for the substitute for polyvinyl chloride, since they are superior in the strength, strain restorability and so on, and, thus, they are suitable for producing formed products, such as films, sheets, pipes and tubes, especially films for packaging, such as stretchable films and wrapping films. It is furthermore preferable that an anti-fogging agent (C) and/or a nucleating agent (D) is compounded in these compositions, since thereby a formed product superior in the transparency, fogging resistance and durable fogging resistance is obtained.

The composition of above 4) is superior especially in the strength, shock resistamce, formability and transparency, so that they are suitable for applications for films, sheets, pipes and tubes, in particular, for packaging heavy weight articles, namely, bags for heavy articles.

Now, descriptions shall be directed to the process for producing the ethylenic copolymer (A) and the ethylenic polymer (B).

The ethylenic copolymer (A) and the ethylenic polymer (B) to be employed according to the present invention can

be produced by, for example, co-polymerizing ethylene with an aromatic vinyl compound and/or an $\alpha$ -olefin or polymerizing ethylene solely in a known technique, wherein it is preferable to carry out the copolymerization especially in the presence of a metallocene catalyst (a) or to carry out the ethylene homopolymerization in the presence of a catalyst based on vanadium or titanium.

As the metallocene catalyst (a), those based on metallocene used hitherto as single site catalyst and ones simillar to them may be used without any restriction, wherein, however, special preference is given to catalysts composed of a metallocene of a transition metal (referred to as a transition metal compound) (b), an organic aluminum oxy-compound (c) and/or an ionizing ionic compound (d).

For the metallocene (b), those of transition metals selected from Group 4 of the periodic table of elements with 18 Groups (long form) according to the Revised IUPAC Inorganic Nomenclature (1989) and, concretely, those expressed by the following general formula (1)

$$ML_X \qquad (1)$$

may be enumerated, in which M denotes a metal selected from the Group 4 of the periodic table, namely, zirconium, titanium or hafnium, x is the valence of the transition metal and L represents a ligand coordinating to the transition metal, wherein at least one of the ligands has a cyclopentadienyl skeleton. This ligand L having the cyclopentadienyl skeleton may have one or more substituent groups.

Concrete examples of the ligand having the cyclopentadienyl skeleton include such groups as alkyl-or cycloalkyl-substituted cyclopentadienyl, such as, cyclopentadienyl, methylcyclopentadienyl, ethylcyclopentadienyl, n- or i-propylcyclopentadienyl, n-, i-, sec- or tert-butylcyclopentadienyl, hexylcyclopentadienyl, octylcyclopentadienyl, dimethylcyclopentadienyl, trimethylcyclopentadienyl, tetramethylcyclopentadienyl, pentamethylcyclopentadienyl, methylethylcyclopentadienyl, methylpropylcyclopentadienyl, methylbutylcyclopentadienyl, methylhexylcyclopentadienyl, methylbenzylcyclopentadienyl, ethylbutylcyclopentadienyl, ethylhexylcyclopentadienyl and methylcyclohexylcyclopentadienyl; and others, such as indenyl, 4,5,6,7-tetrahydroindenyl and fluorenyl.

These ligand groups may further be substituted by, for example, halogen atom(s) and trialkylsilyl group(s).

Among them, alkyl-substituted cyclopentadienyls are especially preferred.

In case where the metallocene (b) represented by the general formula (1) has two or more ligand groups L having the cyclopentadienyl skeleton, two of these ligand groups having the cyclopentadienyl skeleton may be bound together through a bridging group, for example, an alkylene, such as ethylene or propylene; a substituted alkylene, such as isopropylidene or diphenylmethylene; silylene or a substituted silylene, such as dimethylsilylene, diphenylsilylene or methylphenylsilylene.

For other ligand group L than those having the cyclopentadienyl skeleton, there may be enumerated, for example, hydrocarbon groups, alkoxy groups, aryloxy groups and sulfo-containing groups ($-SO_3R^1$, in which $R^1$ denotes an alkyl, a halogen-substituted alkyl, an aryl or a halogen- or alkyl-substituted aryl) having 1 - 12 carbon atoms, as well as halogen atoms and hydrogen atom.

As the hydrocarbon groups having 1 - 12 carbon atoms, there may be enumerated such groups as alkyl, cycloalkyl, aryl and aralkyl and, more concretely, alkyl groups, such as methyl, ethyl, n-propyl, isopropyl, n-butyl, isobutyl, sec-butyl, tert-butyl, pentyl, hexyl, octyl, decyl and dodecyl; cycloalkyl groups, such as cyclopentyl and cyclohexyl; aryl groups, such as phenyl and tolyl; and aralkyl groups, such as benzyl and neophyl.

As the alkoxy group, there may be enumerated, for example, methoxy, ethoxy, n-propoxy, isopropoxy, n-butoxy, isobutoxy, sec-butoxy, tert-butoxy, pentoxy, hexoxy and octoxy.

As the aryloxy group, for example, phenoxy may be enumerated.

As the sulfo-containing group ($-SO_3R^1$), there may be enumerated, for example, methanesulfonato, p-toluenesulfonato, trifluoromethanesulfonato and p-chlorobenzenesulfonato.

As the halogen atom, fluorine, chlorine, bromine and iodine are exemplified.

When the transition metal of the metallocene (b) represented by the general formula (1) has a valency of 4, it may be represented more concretely by the general formula (2):

$$R^2_k R^3_l R^4_m R^5_n M \qquad (2)$$

in which M is a transition metal same as that given in the genral formula (1), preferably zirconium or titanium, $R^2$ represents a group (ligand) having a cyclopentadienyl skeleton, $R^3$, $R^4$ and $R^5$ represent each, independently of each other, a group having a cyclopentadienyl skeleton or that which is given in the general formula (1) as the ligand L other than that having a cyclopentadienyl skeleton and k is an integer of 1 or higher, wherein $k + l + m + n = 4$ .

Examples of the metallocene (b) which contains at least two ligands having each a cyclopentadienyl skeleton and in which M is zirconium are given below:

Bis(cyclopentadienyl)zirconium monochloride monohydride,
bis(cyclopentadienyl)zirconium dichloride,
bis(cyclopentadienyl)methylzirconium monochloride,
bis(cyclopentadienyl)zirconium phenoxymonochloride,
bis(methylcyclopentadienyl)zirconium dichloride,
bis(ethylcyclopentadienyl)zirconium dichloride,
bis(n-propylcyclopentadienyl)zirconium dichloride,
bis(isopropylcyclopentadienyl)zirconium dichloride,
bis(n-butylcyclopentadienyl)zirconium dichloride,
bis(cyclopentadienyl)zirconium bis(methanesulfonate),
bis(cyclopentadienyl)zirconium bis(p-toluenesulfonate),
bis(1,3-dimethylcyclopentadienyl)zirconium dichloride,
bis(1-methyl-3-ethylcyclopentadienyl)zirconium dichloride,
bis(1-methyl-3-propylcyclopentadienyl)zirconium dichloride,
bis(methyl-n-propylcyclopentadienyl)zirconium dichloride and
bis(methyl-n-butylcyclopentadienyl)zirconium dichloride.

According to the present invention, it is also possible to use a metallocene (b) in which the 1,3-substituted cyclopentadienyl as given above is replaced by a corresponding 1,2-substituted cyclopentadienyl.

There may also be exemplified metallocenes (b) of bridged structure in which, in the generl formula (2), at least two of the ligands $R^2$, $R^3$, $R^4$ and $R^5$, for example, $R^2$ and $R^3$ are the group (ligand) having a cyclopentadienyl skeleton and such at least two groups are bound each other through a bridging group, such as alkylene, substituted alkylene, silylene or substituted silylene. In this case, the groups $R^4$ and $R^5$ stand, independently of each other, for the ligand L other than that having a cyclopentadienyl skeleton as given in the general formula (1).

As the metallocene (b) of such a bridged structure, there may be enumerated, for example,
ethylenebis(indenyl)dimethylzirconium,
ethylenebis(indenyl)zirconium dichloride,
ethylenebis(indenyl)zirconium-bis(trifluoromethane sulfonate,
ethylenebis(4,5,6,7-tetrahydroindenyl)zirconium dichloride,
isopropylidene(cyclopentadienyl-fluorenyl)zirconium dichloride,
isopropylidene(cyclopentadienyl-methylcyclopentadienyl)zirconium dichloride,
isopropylidenebis(indenyl)zirconium dichloride.
dimethylsilylenebis(cyclopentadienyl)zirconium dichloride,
dimethylsilylenebis(methylcyclopentadienyl)zirconium dichloride,
dimethylsilylenebis(dimethylcyclopentadienyl)zirconium dichloride,
dimethylsilylenebis(trimethylcyclopentadienyl)zirconium dichloride,
dimethylsilylenebis(indenyl)zirconium dichloride,
dimethylsilylene(cyclopentadienyl-fluorenyl)zirconium dichloride
diphenylsilylenebis(indenyl)zirconium dichloride and
methylphenylsilylenebis(indenyl)zirconium dichloride.

According to the present invention, it is also possible to use as the metallocene (b) a metallocene represented by the general formula (3):

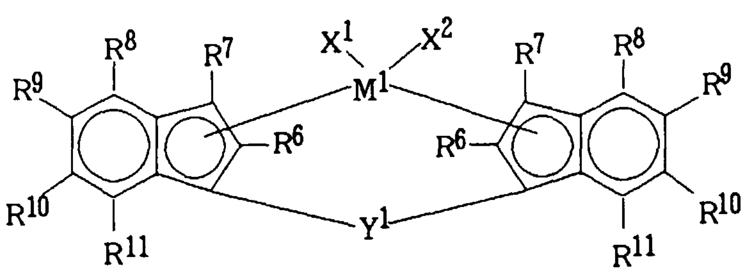

· · · · (3)

In the general formula (3), $M^1$ represents a transition metal of Group 4, 5 or 6 of the periodic table and is concretely titanium, zirconium or hafnium.

$R^6$ and $R^7$ represent each, independently of each other, hydrogen atom, a halogen atom, a hydrocarbon group having 1 - 20 carbon atoms, a halogenated hydrocarbon group having 1 - 20 carbon atoms, a silicium-containing group, an oxygen-containing group, a sulfur-containing group, a nitrogen-containing group or a phosphorus-containing group. They represent concretely a halogen atom, such as fluorine, chlorine, bromine or iodine; a hydrocarbon group having 1 - 20 carbon atoms, for example, an alkyl group, such as methyl, ethyl, propyl, butyl, hexyl or cyclohexyl; an alkenyl group, such as vinyl, propenyl or cyclohexenyl; an aralkyl group, such as benzyl, phenylethyl or phenylpropyl; or an aryl group, such as phenyl, tolyl, dimethylphenyl, naphthyl or methylnaphthyl; a halogenated hydrocarbon group in which the hydrocarbon group such as given above is substituted by halogen atom(s); a silicium-containing group, for example, hydrocarbon-monosubstituted silyl group, such as methylsilyl or phenylsilyl, a hydrocarbon-disubstituted silyl, such as dimethylsilyl or diphenyl-silyl, a hydrocarbon-trisubstituted silyl, such as trimethylsilyl or triethylsilyl, a silyl ether of a hydrocarbon-substituted silyl, such as trimethylsilyl ether, a silicium-substituted alkyl group, such as trimethylsilylmethyl, or a silicium-substituted aryl group, such as trimethylsilylphenyl; an oxygen-containing group, for example, hydroxy, alkoxy such as methoxy or ethoxy, aryloxy such as phenoxy or methylphenoxy, or arylalkoxy such as phenylmethoxy or phenylethoxy; a sulfur-containing group in which the oxygen in the above oxygen-containing group is replaced by sulfur; a nitrogen-containing group, for example, amino, alkylamino, such as methylamino or dimethylamino, or an aryl-or alkylarylamino, such as phenylamino or methylphenylamino; or a phosphorus-containing group, such as dimethylphosphino.

Among them, for $R^6$, a hydrocarbon group, in particular, a hydrocarbon group having 1 - 3 carbon atoms, such as methyl, ethyl or propyl, is preferred. For $R^7$, hydrogen atom or a hydrocarbon group, especially hydrogen atom or a hydrocarbon group having 1 - 3 carbon atoms, such as methyl, ethyl or propyl is preferred.

$R^8$, $R^9$, $R^{10}$ and $R^{11}$ stand each, independently of each other, for hydrogen atom, a halogen atom, a hydrocarbon group having 1 - 20 carbon atoms or a halogenated hydrocarbon group having 1 - 20 carbon atoms. Among them, hydrogen atom, a hydrocarbon and a halogenated hydrocarbon group are preferred. Among the pairs of $R^8$ with $R^9$, $R^9$ with $R^{10}$ and $R^{10}$ with $R^{11}$, at least one pair may combine together to build up a monocyclic aromatic ring together with the carbon atoms bound to such a pair.

If two or more hydrocarbon radicals or halogenated hydrocarbon rasicals are present in the groups other than that building up an aromatic ring, they may combine together to form a ring. In case where $R^{11}$ is a substituent group other than an aromatic group, it may represent preferably hydrogen atom.

For the halogen atom, for the hydrocarbon group having 1 - 20 carbon atoms and for the halogenated hydrocarbon group having 1 - 20 carbon atoms, there may be enumerated concretely those which are given for $R^6$ and $R^7$.

$X^1$ and $X^2$ in the formula (3) represent each, independently of each other, hydrogen atom, a halogen atom, a hydrocarbon group having 1 - 20 carbon atoms, a halogenated hydrocarbon group having 1 - 20 carbon atoms, an oxygen-containing group or a sulfur-containing group.

For the halogen atom, for the hydrocarbon group having 1 - 20 carbon atoms, for the halogenated hydrocarbon group having 1 - 20 carbon atoms and for the oxygen-containing group, concretely, those which are given for $R^6$ and $R^7$ may be exemplified.

For the sulfur-containing group, there may be exemplified sulfonates, such as methyl sulfonate, trifluoromethane sulfonate, phenyl sulfonate, benzyl sulfonate, p-toluene sulfonate, trimethylbenzene sulfonate, triisobutylbenzene sulfonate, p-chlorobenzene sulfonate and pentafluorobenzene sulfonate; and sulfinates, such as methyl sulfinate, phenyl sulfinate, benzene sulfinate, p-toluene sulfinate, trimethylbenzene sulfinate and pentafluorobenzene sulfinate, in addition to those which are given for $R^6$ and $R^7$.

$Y^1$ in the formula (3) stands for a divalent hydrocarbon radical having 1 - 20 carbon atoms, a divalent halogenated hydrocarbon radical having 1 - 20 carbon atoms, a divalent silicium-containig radical, a divalent germanium-containing radical, a divalent tin-containing radical, -O-, -CO-, -S-, -SO-, $-SO_2-$, $-NR^{12}-$, $-P(R^{12})-$, $-P(O)(R^{12})-$, $-BR^{12}-$ or $-AlR^{12}-$, wherein $R^{12}$ represents hydrogen atom, a halogen atom, a hydrocarbon group having 1 - 20 carbon atoms or a halogeneted hydrocarbon group having 1 - 20 carbon atoms.

Concrete examples of $Y^1$ include alkylenes, such as methylene, dimethylmethylene, 1,2-ethylene, dimethyl1,2-ethylene, 1,3-trimethylene, 1,4-tetramethylene, 1,2-cyclohexylene and 1,4-cyclohexylene; divalent hydrocarbon groups having 1 - 20 carbon atoms, such as diphenylmethylene and diphenyl-1,2-ethylene; halogenated hydrocarbon groups corresponding to halogenated ones of the above divalent hydrocarbon groups having 1 - 20 carbon atoms, such as chloromethylene; divalent silicium-containing radicals, for example, alkyl silylenes, alkylarylsilylenes and arylsilylenes, such as methylsilylene, dimethylsilylene, diethylsilylene, di(n-propyl)silylene, di(i-propyl)silylene, di(cyclohexyl)silylene, methylphenylsilylene, diphenylsilylene, di(p-tolyl)silylene and di(p-chlorophenyl)silylene, and alkyldisilylenes, alkylaryldisilylenes and aryldisilylenes, such as tetramethyl-1,2-disilylene and tetraphenyl-1,2-disilylene; divalent germanium-containing radicals corresponding to those in which silicium atom is replaced by germanium in the above divalent silicium-containing radicals; and divalent tin-containing radicals corresponding to those in which silicium atom is replaced by tin in the above divalent silicium-containing radicals.

For the group $R^{12}$, a halogen atom, a hydrocarbon group having 1 - 20 carbon atoms and a halogenated hydrocarbon group having 1 - 20 carbon atoms, as given for the group $R^6$ or $R^7$, may be exemplified.

Among those exemplified above for $Y^1$, divalent silicium-containing radicals, divalent germanium-containing radicals and divalent tin-containing radicals are preferred, wherein special preference is given to divalent silicium-containing radicals, in particular, to alkylsilylenes, alkylarylsilylenes and arylsilylenes.

Concrete examples of the metallocene (b) represented by the formula (3) are recited below:

rac-ethylene(2-methyl-1-indenyl)2-zirconium dichloride,
rac-dimethylsilylene(2-methyl-1-indenyl)2-zirconium dichloride,
rac-dimethylsilylene(2-methyl-1-indenyl)2-zirconiumdimethyl,
rac-dimethylsilylene-bis(4,7-dimethyl-1-indenyl)zirconium dichloride,
rac-dimethylsilylene-bis(2,4,7-trimethyl-1-indenyl)zirconium dichloride,
rac-dimethylsilylene-bis(2,4,6-trimethyl-1-indenyl)zirconium dichloride,
rac-dimethylsilylene-bis(4-phenyl-1-indenyl)zirconium dichloride,
rac-dimethylsilylene-bis(2-methyl-4-phenyl-1-indenyl)zirconium dichloride,
rac-dimethylsilylene-bis{2-methyl-4-( α -naphthyl)-1-indenyl}zirconium dichloride,
rac-dimethylsilylene-bis{2-methyl-4-( β -naphthyl)-1-indenyl}zirconium dichloride and
rac-dimethylsilylene-bis{2-methyl-4-(1-anthracenyl)-1-indenyl}zirconium dichloride.

According to the present invention, it is also possible to use metallocenes represented by the general formula (4) given below, as the metallocene (b).

$$L^1M^2Z_2 \qquad (4)$$

in which $M^2$ is a metal of Group 4 or of the lanthanide series of the periodic table, $L^1$ denotes a derivative of non-localized $\pi$ -bonding group, which provides the active site of the metal $M^2$ with a captive geometry, and the two Zs represent each, independently of each other, hydrogen atom, a halogen atom, a hydrocarbon group having 20 or less carbon atoms, a silyl group having 20 or less silicium atoms or a germyl group having 20 or less germanium atoms.

Among these metallocenes (b) represented by the formula (4), preference is given to those expressed by the following general formula (5):

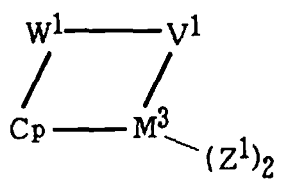

...... (5)

in which $M^3$ is titanium, zirconium or hafnium, $Z^1$ has the same meaning as Z in the general formula (4), Cp denotes a cyclopentadienyl group, a substituted cyclopentadienyl group or a derivative of these groups, which is bound to $M^3$ by $\pi$ -bonding in a $\eta$ $^5$-binding form, $W^1$ represents oxygen atom, sulfur atom, boron atom or an element of Group 14 of the periodic table or a radical containing such an element and $V^1$ is a ligand containing nitrogen, phosphorus, oxygen or sulfur. It is permissible that a condensed ring may be formed from $W^1$ and $V^1$ or from Cp and $W^1$.

Preferred examples of the group represented by Cp in the general formula (5) include cyclopentadienyl, indenyl, fluorenyl and saturated derivatives of them. They form a ring together with the metal ($M^3$). Each carbon atom in the cyclopentadienyl group may be substituted by one and the same or a different radical selected from the group consisting of halogen radicals, hydrocarbyl radicals, substituted hydrocarbyl radicals in which one or more hydrogen atoms may be replaced by a halogen atom, and hydrocarbyl-substituted metalloid radicals, wherein the metalloid is selected from the elements of Group 14 of the periodic table. Here, one or more of the substituent groups may build up together a fused ring. At least one preferred hydrogen substitution-permissible hydrocarbyl or substituted hydrocarbyl group in the cyclopentadienyl group has 1 - 20 carbon atoms and includes one or more linear or branched chain alkyl groups, one or more cyclic hydrocarbon groups, one or more alkyl-substituted cyclic hydrocarbon groups and/or one or more aromatic and alkyl-substituted aromatic groups. Preferable organometalloid groups contain one or more mono-, di- and trisubstituted organometalloid groups of elements of Group 14 of the periodic table and each of the hydrocarbyl groups has 1 - 20 carbon atoms. Concrete examples of preferable organometalloid group include trimethylsilyl, triethylsilyl, ethyldimethylsilyl, methyldiethylsilyl, phenyldimethylsilyl, methyldiphenylsilyl, triphenylsilyl, triphenylgermyl and trimethylgermyl.

Concrete examples of the group $Z^1$ in the general formula (5) include hydrido, halo, alkyl, silyl, germyl, aryl, amido,

aryloxy, alkoxy, phosphido, sulfido, acyl, pseudohalides, such as cyanido and azido, and acethylacetonato as well as combinations of them wherein such combinations may be composed of identical and/or different groups.

For the metallocenes (b) represented by the general formula (5), especially those represented by the following general formula (6) are preferred:

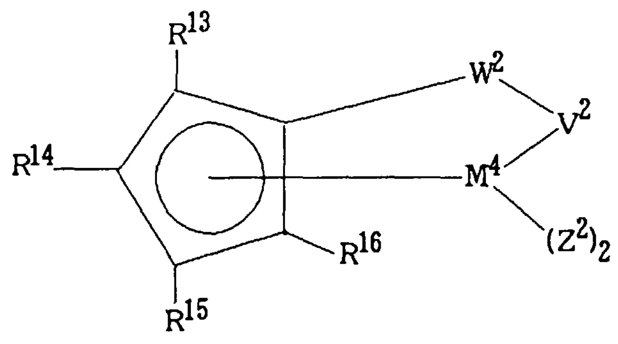

..... (6)

In the formula (6), $M^4$ has the same meaning as $M^3$ in the formula (5), $V^2$ may stand either for the group -O-, -S-, -$NR^{17}$- or -$PR^{17}$- or for a neutral ligand of a two-electron doner selected from the group consisting of $OR^{17}$, $SR^{17}$, $N(R^{17})_2$ and $P(R^{17})_2$, wherein $R^{17}$ denotes hydrogen atom, an alkyl, aryl, silyl, halogenated alkyl or halogenated aryl having 20 or less atoms of the elements other than hydrogen, or, further, may form a condensed ring together with another $R^{17}$ or with $R^{18}$ referred to afterwards.

In the formula (6), $W^2$ stands for $Si(R^{18})_2$, $C(R^{18})_2$, $Si(R^{18})_2$ $Si(R^{18})_2$, $C(R^{18})_2C(R^{18})_2$, $CR^{18}=CR^{18}$, $C(R^{18})_2Si(R^{18})_2$, $Ge(R^{18})_2$, $BR^{18}$ or $B(R^{18})_2$, wherein $R^{18}$ has the same meaning as $R^{17}$ given above.

In the formula (6), $R^{13}$ - $R^{16}$ may stand each, independently of each other, for hydrogen atom or for a radical of alkyl, aryl, silyl, germyl, cyano or halo, which has 20 or less atoms other than hydrogen, or a combination of such radicals, such as alkaryl, aralkyl, silyl-substituted alkyl, silyl-substituted aryl, cyanoalkyl, cyanoaryl, haloalkyl or halosilyl, wherein it is possible that one or more pairs of adjoining groups of $R^{13}$ - $R^{16}$ may form a hydrocarbyl ring condensed with the cyclopentadienyl moiety.

$Z^2$ in the formula (6) may represent a hydrido or may stand for a radical selected from the group consisting of halo and radicals of alkyl, arylsilyl, germyl, aryloxy, alkoxy, amido and silyloxy having 20 or less atoms of the elements other than hydrogen, as well as combinations of them (for example, alkaryl, aralkyl, silyl, substituted alkyl, silyl-substituted aryl, aryloxyalkyl, arvloxyaryl, alkoxyalkyl, alkoxyaryl, amidoalkyl, amidoaryl, siloxyalkyl, siloxyaryl, amidosiloxyalkyl, haloalkyl and haloaryl) and neutral Lewis bases having up to 20 atoms of elements other than hydrogen.

When $V^2$ in the metallocene (b) represented by the formula (6) is a neutral two-electron-donating ligand, the bonding between $M^4$ and $V^2$ is constituted of coordinate-covalent bond. Here, the complex can exist as a dimer or a higher oligomer.

In the metallocene (b) represented by the formula (6), it is preferable that at least one among $R^{13}$ - $R^{16}$, $Z^2$, $R^{17}$ and $R^{18}$ constitutes an electron donating moiety and, in particular, that $V^2$ is an amido or a phosphido corresponding to -$NR^{19}$- or -$PR^{19}$- wherein $R^{19}$ represents an alkyl having 1 - 10 carbon atoms or an aryl having 6 - 10 carbon atoms.

Among the metallocenes (b) represented by the formula (6), those amidosilane and amidoalkanediyl compounds which are represented by the following general formula (7) are preferred.

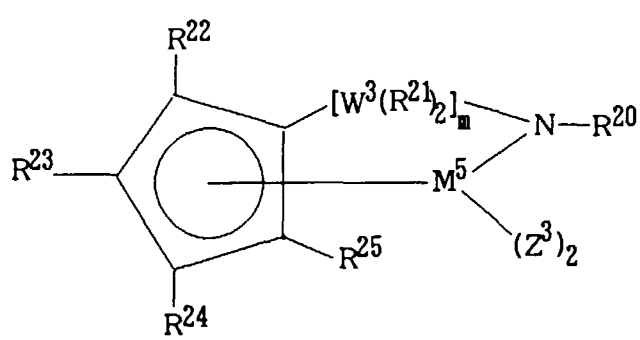

..... (7)

In the formula (7), $M^5$ is titanium, zirconium or hafnium bound to the cyclopentadienyl group by a $\eta^5$ bonding, $R^{20}$ - $R^{25}$ represent each, independently of each other, a radical selected from the group consisting of hydrogen and radicals of silyl, alkyl and aryl each having up to 10 carbon atoms as well as combinations of them or adjoining pair(s) among $R^{22}$ -$R^{25}$ may form a hydrocarbyl ring condensed with the cyclopentadienyl moiety, $W^3$ stands for silicium atom or carbon atom, $Z^3$ represents hydrido or stands for a halo or an alkyl, aryl, aryloxy or alkoxy each having up to 10 carbon atoms.

For the metallocenes (b) represented by the formula (7), those in which $R^{20}$ stands for methyl, ethyl, propyl, butyl, pentyl, hexyl (inclusive of isomers), norbornyl, benzyl or phenyl, $R^{22}$ - $R^{25}$ denote each, independently of each other, hydrogen atom, methyl, ethyl, propyl, butyl, pentyl, hexyl (inclusive of isomers), norbornyl or benzyl and $Z^3$ denotes chloro, bromo, iodo, methyl, ethyl, propyl, butyl, pentyl, hexyl (inclusive of isomers), norbornyl, benzyl or phenyl are preferred. Also, metallocenes in which groups among $R^{22}$ - $R^{25}$ form a condensed ring and in which the cyclopentadienyl moiety constitutes indenyl, tetrahydroindenyl, fluorenyl or octahydrofluorenyl ring are preferred.

Concrete examples of the metallocenes (b) represented by the formula (7) include (t-butylamido)dimethyl(tetramethyl- $\eta^5$-cyclopentadienyl)silanetitanium dichloride, (t-butylamido)(tetramethyl- $\eta^5$-cyclopentadienyl)-1,2-ethanediylzirconium dichloride, (tertbutylamido)(tetramethyl-$\eta^5$-cyclopentadienyl)-1,2-ethanediyltitanium dichloride, (methylamido)(tetramethyl-$\eta^5$-cyclopentadienyl)-1,2-ethanediylzirconium dichloride, (methylamido)(tetramethyl-$\eta^5$-cyclopentadienyl)-1,2-ethane diyltitanium dichloride, (ethylamido)(tetramethyl-$\eta^5$-cyclopentadienyl)methylenetitanium dichloride, (t-butylamido)dimethyl(tetramethyl- $\eta^5$-cyclopentadienyl)silanezirconium dibenzyl, (benzylamido)dimethyl(tetramethyl$\eta^5$-cyclopentadienyl)silanetitanium dichloride and (phenylphosphido)dimethyl(tetramethyl-$\eta^5$-cyclopentadienyl)silanezirconium dibenzyl.

According to the present invention, the followings may also be used for the metallocene (b):

Ethylene[2-methyl-4(9-phenanthryl)-1-indenyl](9-fluorenyl) zirconium dichloride
Ethylene[2-methyl-4(9-phenanthryl)-1-indenyl](2,7-dimethyl -9-fluorenyl)zirconium dichloride
Ethylene[2-methyl-4(9-phenanthryl)-1-indenyl](2,7-di-tertbutyl-9-fluorenyl)zirconium dichloride
Ethylene(2-methyl-4,5-benzo-1-indenyl)(9-fluorenyl)zirconium dichloride
Ethylene(2-methyl-4,5-benzo-1-indenyl)(2,7-dimethyl-9-fluorenyl)zirconium dichloride
Ethylene(2-methyl-4,5-benzo-1-indenyl)(2,7-di-tert-butyl-9-fluorenyl)zirconium dichloride
Ethylene(2-methyl-α-acenaphtho-1-indenyl)(9-fluorenyl)zirconium dichloride
Ethylene(2-methyl-α-acenaphtho-1-indenyl)(2,7-dimethyl-9-fluorenyl)zirconium dichloride
Ethylene(2-methyl-α-acenaphtho-1-indenyl)(2,7-di-t-butyl-9-fluorenyl)zirconium dichloride
Dimethylsilylene[2-methyl-4(9-phenanthryl)-1-indenyl](9-fluorenyl)zirconium dichloride

As others, those in which zirconium in the above-exemplified zirconium metallocenes is replaced by titanium or by hafnium may also be exemplified.

As to the method for preparing the metallocenes (b), reference may be made to, for example, Japanese Patent Kokai Hei-3-163088 A (corresponding to European Patent No. 416815 A2/1991).

For the metallocene (b) for producing the ethylenic copolymer (A) and the ethylenic polymer (B) which contain the copolymerized aromatic vinyl compound, those represented by the general formula (4) are preferred particularly in view of the polymerization activity and transparency, rigidity, heat resistance and shock resistance of the formed product. The metallocenes (b) may be used alone or in a combination of two or more of them.

The metallocenes (b) to be used according to the present invention may be diluted with a hydrocarbon or halogenated hydrocarbon diluent upon its use.

Now, the description is directed to the organic aluminum oxy-compound (c) and to the ionized ionic compound (d) to be used for preparing the metallocene catalyst (a).

As the organic aluminum oxy-compound (c) to be used according to the present invention, known aluminoxanes and those benzene-insoluble organic aluminum oxy-compounds which are exemplified in Japanese Patent Kokai Hei-2-78687 A (corresponding to US Patent No. 4,990,640) may be used.

These known aluminoxanes (c) are represented by the following general formulae (8) and (9):

$$(R^{26})_2Al\text{———}\underset{\displaystyle R^{26}}{\underset{|}{(OAl)_m}}\text{———}OAl(R^{26})_2 \qquad \cdots\cdots \quad (8)$$

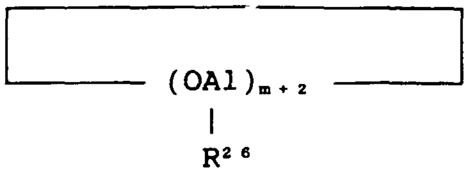

...... (9)

In the above formulae (8) and (9), $R^{26}$ is a hydrocarbon group, such as methyl, ethyl, propyl or butyl, wherein preference is given for methyl and ethyl, especially for methyl, and m is an integer of 2 or greater, preferably of 5 - 40.

Here, it is also possible that the aluminoxane (c) be composed of mixed alkyloxyaluminum units composed of an alkyloxyaluminum unit represented by the formula $[OAl(R^{27})]$ and of an alkyloxyaluminum unit represented by the formula $[OAl(R^{28})]$, wherein $R^{27}$ and $R^{28}$ are each a hydrocarbonyl group which may be different from each other and may stand for those given for $R^{26}$.

The aluminoxane (c) can be prepared, for example, by the methods given below and is obtained usually in a form of solution in a hydrocarbon solvent:

(1) To a suspension of a salt containing adsorbed moisture or water of cristallization, such as hydrated salt of magnesium chloride, copper sulfate, aluminum sulfate, nickel sulfate or cerous chloride, in an aromatic hydrocarbon solvent, an organoaluminum compound, such as trialkylaluminum, is added to cause reaction with water and recovering the reaction product as a solution in the solvent.

(2) An organoaluminum compound, such as trialkylaluminum, is reacted directly with water (liquid water, ice or steam) in a suitable aromatic hydrocarbon solvent, such as benzene, toluene, ethyl ether or tetrahydrofuran, to form a solution of the reaction product in the solvent, which is recovered.

(3) An organoaluminum compound, such as trialkylaluminum, is reacted with an organotin oxide, such as dimethyltin oxide or dibutyltin oxide, in a suitable hydrocarbon solvent, such as decane, benzene or toluene, to form a solution of the reaction product in the solvent, which is recovered.

As the solvent used in the preparation of the aluminoxane (c), there may be exemplified aromatic hydrocarbons, such as benzene, toluene, xylene, cumene and cymene; aliphatic hydrocarbons, such as pentane, hexane, heptane, octane, decane, dodecane, hexadecane and octadecane; alicyclic hydrocarbons, such as cyclopentane, cyclohexane, cyclooctane and methylcyclopentane; ethers, such as ethyl ether and tetrahydrofuran; petroleum cut fractions, such as kerosene and gas oil; and halogenated hydrocarbons, such as the chlorinated or brominated products of the hydrocarbons given above. Among these solvents, especially aromatic hydrocarbons are preferred.

For the ionized ionic compound (d), there may be exemplified Lewis acids, ionic compounds, boranes and carboranes. Such ionized ionic compounds (d) are given in the literatures, for example, Japanese Patent Kohyo Hei-1-501950 (corresponding US Patent Nos. 5,198,401, 5,278,119, 5,384,299, 5,391,629, 5,407,884, 5,408,017, 5,470,927, 5,483,014, 5,599,761 and 5,621,126), Japanese Patent Kohyo Hei-1-502036 (corresponding US Patent Nos. 5,153,157, 5,198,401, 5,241,025, 5,384,299, 5,391,629, 5,408,017, 5,470,927, 5,599,761 and 5,621,126), Japanese Patent Kokais Hei-3-179005 (corresponding US Patent No. 5,561,092), Hei-3-179006 (corresponding US Patent No. 5,225,500), Hei-3-207703 (corresponding US Patent No. 5,387,568), Hei-3-207704 (corresponding US Patent Nos. 5,519,100 and 5,614,457 ) and US Patent No. 5,321,106.

Examples of the Lewis acid to be used as the ionized ionic compound (d) include compounds represented by the formula $BR_3$ (R may be identical with or different from each other and may stand for fluorine or a phenyl group which may have substituent group(s), such as fluorine, methyl and trifluoromethyl), for example, trifluoroboron, triphenylboron, tris(4-fluorophenyl)boron, tris(3,5-difluorophenyl)boron, tris(4-fluoromethylphenyl)boron and tris(pentafluorophenyl)boron.

The ionic compound to be uaed as the ionized ionic compound (d) may be a salt composed of a cationic component and an anionic component. The anion functions to stabilize the transition metal of the metallocene by building up an ion pair when reacted with the metallocene (b). For such an anion, anions of organoboron, organoarsene and organoaluminum are enumerated, wherein an anion of relatively bulky geometry permitting stabilization of transition metal is preferred. For the cation, metal cations, organometallic cations, carbonium cations, oxonium cations, sulfonium cations, phosphonium cations and ammonium cation are enumerated. More specifically, triphenylcarbenium cation, tributylammonium cation, N,N-dimethylammonium cation and ferrocenium cations are preferred.

Among them, ionic compounds having boron-containing moiety as anion are preferred. Concretely, trialkyl-substituted ammonium salts, N,N-dialkylanilinium salts, dialkylammonium salts and triarylphosphonium salts are exemplified

for the ionic compound.

As the trialkyl-substituted ammonium salt, there may be enumerated, for example, triethylammonium tetra(phenyl)borate, tripropylammonium tetra(phenyl)borate, tri(n-butyl)ammonium tetra(phenyl)borate and trimethylammonium tetra(p-tolyl)borate.

As the N,N-dialkylanilinium salt, there may be enumerated, for example, N,N-dimethylanilinium tetra(phenyl)borate.

As the dialkylammonium salt, there may be enumerated, for example, di(n-propyl)ammonium tetra(pentafluorophenyl)borate and dicyclohexylammonium tetra(phenyl)borate.

As the triarylphosphonium salt, there may be enuemerated, for example, triphenylphosphonium tetra(phenyl)borate, tri(methylphenyl)phosphonium tetra(phenyl)borate and tri(dimethylphenyl)phosphonium tetra(phenyl)borate.

As the ionic compound, there may further be enumerated triphenylcarbenium tetrakis(pentafluorophenyl)borate, N,N-dimethylanilinium tetrakis(pentafluorophenyl)borate and ferrocenium tetra(pentafluorophenyl)borate.

As the borane compound to be used as the ionized ionic compound (d), the following compounds may also be enumerated:

Decaborane(14)
Salts of such anion as bis[tri(n-butyl)ammonium] nonaborate and bis[tri(n-butyl)ammonium] decaborate
Salts of metal borane anions, such as tri(n-butyl)ammonium bis(dodecahydridododecaborate)cobaltate(III) and bis[tri(n-butyl)ammonium] bis(dodecahydridododecaborate)nickelate(III).

As the carboranes to be used as the ionized ionic compound (d), there may be enumerated, for example, salts of such anions as 4-carbnonaborane(14) and 1,3-dicarbnonaborane(13); and salts of metal carborane anions, such as tri(n-butyl)ammonium bis(nonahydrido-1,3-dicarbnonaborate)cobaltate(III) and tri(n-butyl)ammonium bis(undecahydrido-7,8-dicarbundecaborate) ferrate(III).

These ionized ionic compounds (d) may be used alone or in a combination of two or more of them.

The metallocene catalyst (a) to be used according to the present invention may contain on requirement, in addition to the components (b), (c) and (d) given above, a further component (e) of an organoaluminum compound given below.

As the organoaluminum compound (e) to be used on requirement according to the present invention, for example, the organoaluminum compounds represented by the following general formula (10) may be enumerated.

$$(R^{29})_nAlX_{3-n} \qquad (10)$$

in which $R^{29}$ is a hydrocarbon group having 1 - 15 carbon atoms, preferably 1 - 4 carbon atoms, X denotes a halogen atom or hydrogen atom and n is an integer of 1 - 3.

The hydrocarbon group having 1 - 15 carbon atoms for $R^{29}$ may be, for example, alkyl, cycloalkyl or aryl and, concretely, methyl, ethyl, n-propyl, isopropyl or isobutyl.

Concrete examples of such an organoaluminum compound (e) include the followings:

Trialkylaluminums, such as trimethylaluminum, triethylaluminum, triisopropylaluminum, tri-n-butylaluminum, triisobutylaluminum and tri-sec-butylaluminum; alkenylaluminums, such as those represented by the general formula $(i\text{-}C_4H_9)_xAl_y(C_5H_{10})_z$, in which x, y and z denote each a positive integer wherein $z \geqq 2x$, for example, isoprenylaluminum; dialkylaluminum halides, such as dimethylaluminum chloride and diisobutylaluminum chloride; dialkylaluminum hydrides, such as diisobutylaluminum hydride and so on; dialkylaluminum alkoxides, such as dimethylaluminum methoxide and so on; and dialkylaluminum aryloxides, such as diethylaluminum phenoxide and so on.

It is permissible to use, as the organoaluminum compound (e), also the compounds represented by the following formula (11):

$$(R^{31})_nAl(R^{30})_{3-n} \qquad (11)$$

in which $R^{31}$ has the same meaning as foregoing $R^{29}$, $R^{30}$ is a group of $-OR^{32}$, $-OSi(R^{33})_3$, $-OAl(R^{34})_2$, $-N(R^{35})_2$, $-Si(R^{36})_3$ or $-N(R^{37})Al(R^{38})_2$ and n is a mumber of 1 - 2, wherein $R^{32}$, $R^{33}$, $R^{34}$ and $R^{38}$ denote each methyl, ethyl, isopropyl, isobutyl, cyclohexyl or phenyl, $R^{35}$ denotes hydrogen atom, methyl, ethyl, isopropyl, phenyl or trimethylsilyl and $R^{36}$ and $R^{37}$ represent each methyl or ethyl.

The followings are concrete examples of such an organoaluminum compound (e):

$(C_2H_5)_2Al[OSi(CH_3)_3]$
$(iso\text{-}C_4H_9)_2Al[OSi(CH_3)_3]$
$(C_2H_5)_2Al[OAl(C_2H_5)_2]$
$(CH_3)_2Al[N(C_2H_5)_2]$

$(C_2H_5)_2Al[NH(CH_3)]$
$(iso\text{-}C_4H_9)_2Al[N\{Si(CH_3)_3\}_2]$

The metallocene catalyst (a) to be used according to the present invention may be a solid catalyst having at least one of the above-mentioned components (b), (c), (d) and (e) supported on a fine particulate carrier.

The metallocene catalyst (a) may also be a prepolymer-catalyst composed of a fine particulate carrier, the component (b) and the component (c) [or the component (d)] and a polymer or a copolymer produced by a preliminary polymerization, with, if necessary, possible incorporation of the component (e).

The fine particulate carrier to be used in the solid catalyst or in the prepolymer-catalyst may be a granular or a fine particulate solid of an organic or inorganic compound having a particle size of 10 - 300 μm, preferably 20 - 200μm.

For the inorganic carrier, porous oxides are preferred, of which concrete examples include $SiO_2$, $Al_2O_3$, MgO, $ZrO_2$, $TiO_2$, $B_2O_3$, CaO, ZnO, BaO and $ThO_2$ as well as mixtures of them, such as $SiO_2$/MgO, $SiO_2/Al_2O_3$, $SiO_2/TiO_2$, $SiO_2/V_2O_5$, $SiO_2/Cr_2O_3$ and $SiO_2/TiO_2$/MgO. Among them, those in which at least one selected from the group consisting of $SiO_2$ and $Al_2O_3$ is the principal constituent are preferred.

The inorganic carrier may contain a small amount of one or more of carbonate, sulfate, nitrate or other oxide, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$ and $Li_2O$.

While the properties of the fine particulate carrier may be variable for each specific carrier and in accordance with the method of preparation thereof, those which have a specific surface area of 50 - 1,000 $m^2$/g, preferably 100 - 700 $m^2$/g and a pore volume of 0.3 - 2.5 $cm^3$/g are preferred. The fine particulate carrier may , if necessary, be calcined at a temperature of 100 - 1,000°C , preferably 150 - 700°C for practical use.

For the fine particulate carrier, there may further be enumerated granular or fine particulate solid materials of organic compounds having particle sizes in the range of 10 - 300μm. Such organic fine particulate carriers may be, for example, homo- and copolymer resins constituted mainly of an α -olefin having 2 - 14 carbon atoms, such as ethylene, propylene, 1-butene or 4-methyl-1-pentene, and homo- and copolymer resins constituted mainly of vinylcyclohexane or styrene.

For producing the ethylenic copolymer (A) or the ethylenic polymer (B) using the metallocene catalyst (a), ethylene and aromatic vinyl compound and/or an α -olefin are subjected to copolymerization usually by a solution polymerization or a slurry polymerization in a liquid medium in the presence of the metallocene catalyst (a).

For such a liquid medium, hydrocarbon solvents, for example, aliphatic hydrocarbons, such as pentane, hexane, heptane, octane, decane, dodecane and kerosene, as well as their halogenated derivatives; alicyclic hydrocarbons, such as cyclohexane, methylcyclopentane and methylcyclohexane, as well as their halogenated derivatives; and aromatic hydrocarbons and their halogenated derivatives, such as benzene, toluene, xylene, ethylbenzene and chlorobenzene, may be employed solely or in a combination.

It is also possible to produce the ethylenic copolymer (A) or the ethylenic polymer (B) by subjecting ethylene and an aromatic vinyl compound and/or an α - olefin to copolymerization by a vapor phase polymerization in the presence of the metallocene catalyst (a). Here, a solid catalyst in which the metallocene (b) is supported on a fine particulate carrier is used especially favorably as the metallocene catalyst (a).

The copolymerization of ethylene with an aromatic vinyl compound and/or an α -olefin may be realized either by a batchwise or a continuous process. For a continuous process, the metallocene catalyst (a) may be used usually in such an amount as explained below.

Thus, the concentration of the metallocene (b) in the polymerization system may be in the range of 0.00005 - 0.1 mmol/liter of the polymerization space, preferably 0.0001 - 0.05 mmol/liter. The organic aluminum oxy-compound (c) may be supplied to the polymerization system at such a rate as to reach an atomic ratio of aluminum to metallocene (b) [i.e. Al/transition metal] in the polymerization system within the range of 0.1 - 10,000, preferably 1 - 5,000. The ionized ionic compound (d) may be supplied to the polymerization system at such a rate as to achieve a mole ratio of the ionized ionic compound (d) to the metallocene (b) [i.e. moles of ionized ionic compound (d)/moles of metallocene(b)] in the polymerization system within the range of 0.1 - 20, preferably 1 - 10. The organoaluminum compound (e) may, when used, be supplied to the polymerization system usually in an amount of 0 - 5 mmol/liter of the polymerization space, preferably 0 - 2 mmol/liter. The copolymerization for producing the ethylenic copolymer (A) or the ethylenic polymer (B) may be realized usually under the conditions of a temperature of -30 to +250 °C , preferably 0 to +200°C , and a pressure exceeding the normal pressure and up to 7.8 MPa (80 Kg/$cm^2$, gauge), preferably up to 4.9 MPa (50 Kg/$cm^2$, gauge).

The polymerization duration (the average residence time in the polymerization reactor for continuous process) may usually be in the range from 5 minutes to three hours, preferably from 10 minutes to 1.5 hours, though variable depending on, for example, catalyst concentration and polymerization temperature. Upon the copolymerization, a molecular weight regulator, such as molecular hydrogen or the like, may be employed.

On the copolymerization of the comonomers, the ethylenic copolymer (A) or the ethylenic polymer (B) is obtained usually in a form of polymerization liquor containing it. By treating this polymerization liquor by a usual method, the ethylenic copolymer (A) or the ethylenic polymer (B) is obtained.

The degree of crystallinity of the ethylenic copolymer (A) or the ethylenic polymer (B) can be reduced by, for example, increasing the supply amount of the $\alpha$ -olefin to be co-polymerized with ethylene to increase the co-polymerized proportion of the $\alpha$ -olefin. The intrinsic viscosity of the ethylenic copolymer or the ethylenic polymer can be controlled by, for example, adjusting the polymerization temperature, the amount of the molecular weight regulator employed and so on.

In the composition according to the present invention, an anti-fogging agent (C) may be included, in addition to the ethylenic copolymer (A) and the ethylenic polymer (B). The anti-fogging agent (C) to be used according to the present invention is an agent for preventing fogging over the inner surface of the formed product, such as film, sheet, pipe or tube, due to condensation of the atmospheric moisture on the surface. There is no restriction for the anti-fogging agent, so long as a hygroscopic function to spread the condensed dew is revealed by making the product surface hydrophilic and, thus, those commonly used as anti-fogging agent may be used as such.

For the anti-fogging agent (C), various surface active agents can be used. Such a surfactant may be of non-ionic, anionic or cationic nature, while non-ionic surfactant is preferred. The surfactant may be used alone or in a combination of two or more thereof.

The non-ionic surfactant to be used as the anti-fogging agent may preferably have an HLB (hydrophile-lipophile balance) in the range of 5 -10, especially 6 - 9, though those having HLB of other range may also be used. It is preferable for non-ionic surfactant to use two or more surfactants together. In case two or more non-ionic surfactants are used, it is preferable that the HLB value as the mixture is in the above-indicated range. For a mixture of two or more surfactants, they may have each an HLB outside the above-indicated range, so long as the "average" HLB as the mixture is in the above range.

Calculation of HLB is carried out in accordance with each of the equations given below.

1) For a fatty acid ester of a polyhydric alcohol:

$$HLB = 20[1 - (S/A)]$$

in which

S = the saponification number of the ester and
A = the neutralization number of the fatty acid.

2) For the polyhydric alcohols (such as glycol, glycerin, solbite and mannite), tall oil, pine oil and beeswax:

$$HLB = (E + P)/5$$

in which

E = the oxyethylene content (wt. %) in the molecule and
P = the polyhydric alcohol content (wt. %) in the molecule.

3) For the case where the hydrophilic group is only oxyethylene:

$$HLB = E/5$$

in which

E = the oxyethylene content (wt. %) in the molecule.

4) For mixtures:

$$HLB = [\{Wa \times HLB(a)\} + \{Wb \times HLB(b)]/(Wa + Wb)$$

in which

HLB(a) = the HLB value for the surfactant (a),
HLB(b) = the HLB value for the surfactant (b),
Wa = weight fraction of the surfactant (a) and

Wb = weight fraction of the surfactant (b).

Though not restrictive, the followings are concrete examples of the non-ionic surfactant to be used as the anti-fogging agent (C), in which the number given in the parentheses is the HLB value for each surfactant:

Sorbitan fatty acid esters, such as sorbitan monooleate (4.3), sorbitan monolaurate (8.6), sorbitan monostearate (4.7), sorbitan monopalmitate (6.7) and sorbitan sesquioleate (3.7); glycerin fatty acid esters, such as glycerin monooleate (4.2) and glycerin monostearate (4.1); polyglycerin fatty acid esters, such as diglycerin monooleate (6.9), diglycerin sesquilaurate (6.3), diglycerin sesquioleate (5.4), tetraglycerin monooleate (10.3), tetraglycerin monostearate (10.2), hexaglycerin monolaurate (13.8), hexaglycerin monooleate (12.2), decaglycerin monooleate (14.5) and decaglycerin monolaurate (15.7); polyoxyalkylene ethers, such as polyoxyethylene(n=4) lauryl ether (9.5) and polyoxyethylene(n=5) lauryl ether (10.8); fatty acid amines, such as lauryl diethanolamine (6.4); and fatty acid amides, such as oleic acid amide.

They may be used alone or in combination of two or more of them.

In the composition according to the present invention, the proportion of the anti-fogging agent (C) may be in the range from 0.5 to 10, preferably from 0.5 to 8, more preferably from 1 to 5 parts by weight per 100 parts by weight of the sum of the ethylenic copolymer(A) and the ethylenic polymer (B). When the proportion of the anti-fogging agent (C) is in the above range, a fogging preventive effect is attained and molded products exhibiting no bleeding of the anti-fogging agent (C) from the product surface and superior in the transparency and in the preservativity of fogging preventive effect together with superior physical properties and heat resistance can be produced from the composition.

While the reason for attainment of a superior durable anti-fogging property by the incorporation of the anti-fogging agent (C) in the composition according to the present invention is not clear, it is assumed that this may be due to a synergistic effect brought about by the ethylenic copolymer (A) and/or ethylenic polymer (B) having the copolymerized aromatic vinyl compound and the anti-fogging agent (C).

In the composition according to the present invention, there may be incorporated a nucleating agent (D). By incorporating the nucleating agent, a micronization of the crystal grains of the components (A) and (B) can be attempted with the result of increase in the crystallization velocity, whereby a composition capable of bringing about a formed product superior in the transparency, rigidity and heat resistance can be obtained, together with an attainment of a high speed molding. Even though the nucleating agent (D) is incorporated, occurence of troubles, such as deterioration in the appearance of the formed product due to bleeding out of the nucleating agent (D) and obstruction in the efficient molding work, is scarce.

For the nucleating agent (D), known ones may be employed, for example, nucleating agents based on rosin, based on organic phosphorus compounds, based on sorbitol, based on aromatic carboxylic acids, based on high melting polymers and based on inorganic materials. Among them, those based on rosin and based on sorbitol, especially those based on sorbitol are preferred. When a nucleating agent based on rosin or based on sorbitol is used, a formed product having better balance between the rigidity, transparency and shock resistance can be obtained. In particular, when a nucleating agent based on sorbitol is used, a formed product which is superior especially in the balance between rigidity, transparency and shock resistance can be obtained with smaller amount of the nucleating agent. The nucleating agent (D) may be incorporated alone or in a combination of two or more agents.

The amount of the nucleating agent (D) to be blended in the composition may favorably be in the range from 0.01 to 10 parts by weight, preferably from 0.1 to 5 parts by weight, per 100 parts by weight of the sum of the components (A) and (B).

For the nucleating agent (D) based on rosin, those containing a metal salt of a rosin as a main component in an amount of 5 - 100 % by weight, preferably 10 - 100 % by weight of the total mass may be employed. Here, the "metal salt of a rosin" means a reaction product of the rosin with a metal compound.

As the rosin, there may be exemplified natural rosins, such as gum rosin, tall oil rosin and wood rosins; modified rosins, such as disproportionated rosins, hydrogenated rosins, dehydrogenated rosins, polymerized rosins and $\alpha$ , $\beta$ -ethylenically unsaturated carboxylic acid-modified rosins; and refined products of the above natural rosins and the modified rosins.

As the unsaturated carboxylic acid to be used for producing the above $\alpha$ , $\beta$ -ethylenically unsaturated carboxylic acid-modified rosin, there may be enumerated, for example, maleic acid, maleic anhydride, fumaric acid, itaconic acid, itaconic anhydride, citraconic acid, acrylic acid and methacrylic acid.

In rosins, usually a plurality of resin acids are contained, such as pimaric acid, sandarachopimaric acid, parastophosphoric acid, isopimaric acid, abietic acid, dehydroabietic acid, neoabietic acid, dihydropimaric acid, dihydroabietic acid and tetrahydroabietic acid.

For the metal compound to be reacted with the rosin to form a salt, there may be employed a compound of a metal, such as sodium, potassium or magnesium, capable of forming a salt with the rosin. Concrete examples of such a metal compound include chlorides, nitrates, acetates, sulfates, carbonates, oxides and hydroxides of the above-mentioned metals.

For the metal salts of rosins, salts of sodium, potassium and magnesium with the above-mentioned rosins are favourable. It is furthermore preferable that the rosins are disproportionated, hydrogenated and dehydrogenated ones, wherein special preference is given to dehydroabietic acid, dihydroabietic acid and dihydropimaric acid as well as derivatives of these acids.

As a more concrete example of the rosin, a compound based on rosin represented by the following general formula (12) may be enumerated.

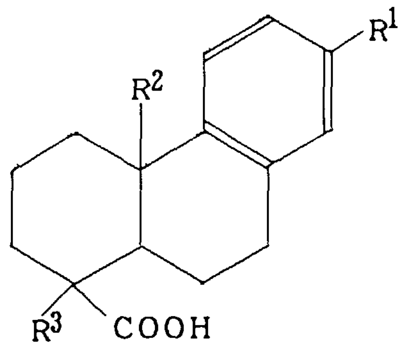

...... (12)

in which $R^1$, $R^2$ and $R^3$ may be identical with or different from each other and denote each hydrogen atom or an alkyl, cycloalkyl or aryl group.

Concrete examples of the alkyl group include those having 1 - 8 carbon atoms, such as methyl, ethyl, n-propyl, i-propyl, n-butyl, i-butyl, t-butyl, pentyl, heptyl and octyl, wherein they may have substituent(s), such as hydroxyl, carboxyl, alkoxy and halogen.

Concrete examples of the cycloalkyl group include those having 5 - 8 carbon atoms, such as cyclopentyl, cyclohexyl and cycloheptyl, wherein they may have substituent(s), such as hydroxyl, carboxyl, alkoxy and halogen.

Concrete examples of the aryl group include those having 6 - 10 carbon atoms, such as phenyl, tolyl and naphthyl, wherein they may have substituent(s), such as hydroxyl, carboxyl, alkoxy and halogen.

Among the compounds represented by the general formula (12), those in which $R^1$, $R^2$ and $R^3$ denote each an identical or different alkyl group are preferred, wherein special preference is given for those in which $R^1$ denotes i-propyl and $R^2$ and $R^3$ stand each for methyl. Metal salts of such a compound brings about a superior effect for increasing the crystallization velocity.

As the compound represented by the general formula (12), there may be exemplified concretely tetrahydroabietic acid.

The compound represented by the general formula (12), such as tetrahydroabietic acid, can be obtained by subjecting a natural rosin to a disproportionation or to a dehydrogenation, followed by a refining treatment.

A metal salt of the compound represented by the general formula (12) may be expressed by the following general formula (13).

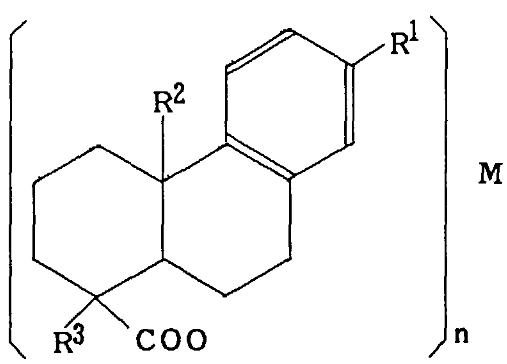

...... (13)

in which M represents a metal ion of a valency of 1 - 3, $R^1$, $R^2$ and $R^3$ are the same as those given in the general formula (12) and n denotes an integer corresponding to the valency of M.

In the general formula (13), M represents a metal ion having a valency of 1 - 3, concrete examples of which include

monovalent metal ions of, for example, lithium, sodium, potassium, rubidium and cesium; divalent metal ions of, for example, beryllium, magnesium, calcium, strontium, barium and zinc; and trivalent metal ions of, for example, aluminum and so on. Among them, monovalent and divalent metal ions are preferable and especially ions of sodium, potassium and magnesium are preferred.

Among the salts represented by the general formula (13), those in which $R^1$, $R^2$ and $R^3$ represent each an identical or different alkyl group and those in which M is a mono- or divalent metal ion are preferred, wherein special preference is given for those in which $R^1$ represents i-propyl, $R^2$ and $R^3$ stand each for methyl and those in which M is an ion of sodium, potassium or magnesium and most preferable ones are those in which $R^1$ represents i-propyl, $R^2$ and $R^3$ stand each for methyl and M is potassium or magnesium ion. Such salts will bring about a superior effect of increasing the crystallization velocity.

As the salts represented by the general formula (13), there may be enumerated concretely, for example, metal salts of dehydroabietic acid, such as lithium dehydroabietate, sodium dehydroabietate, potassium dehydroabietate, beryllium dehydroabietate, magnesium dehydroabietate, calcium dehydroabietate, zinc dehydroabietate and aluminum dehydroabietate.

The salts represented by the general formula (13) can be prepared by reacting the compounds represented by the general formula (12) with compounds of the corresponding metals in a manner known per se. For example, if the compound of the general formula (13) is a metal dehydroabietate, this can be produced by reacting a compound of corresponding metal with dehydroabietic acid represented by the following general formula (14) in a manner known per se.

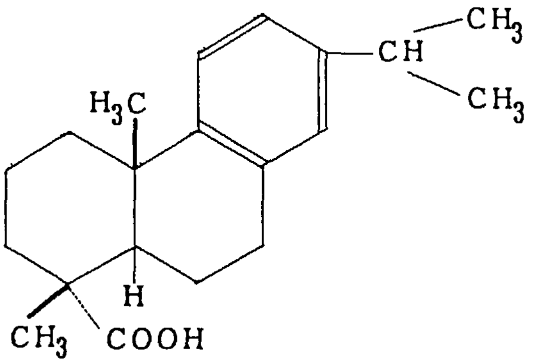

....... (14)

The nucleating agent (D) based on rosin can be used alone or in a combination of two or more thereof. For example, two or more salts represented by the general formula (13) in which $R^1$ to $R^3$ denote one and the same group for all salts and M is different or in which at least one among $R^1$ to $R^3$ is different between the salts and M is common therebetween can be used in combination.

For the nucleating agent (D) based on rosin, all the constituent compounds may not necessarily be metal salt of rosin, but part of the rosin nucleating agent may remain without being converted into salt. Thus, a rosin nucleating agent having a content of 5 - 100 % by weight, preferably 10 - 100 % by weight of rosin metal salt may be used. For example, those in which the salt represented by the general formula (13) is contained in an amount of 5 - 100 %, preferably 10 - 100 %, based on the total weight of the nucleating agent composed of the compound represented by the general formula (12) and the salt represented by the general formula (13), may be employed. Here, those in which the metal (M) amounts to 0.05 - 1 equivalent per one equivalent of the carboxyl group in the compound represented by the general formula (12) are preferred. It is particularly preferable to add 0.3 - 5 parts by weight, most preferably 0.3 - 3 parts by weight of the nucleating agent (D) based on rosin to 100 parts by weight of the sum of the components (A) and (B).

For the nucleating agent (D) based on organic phosphorus compound, there may be exemplified those which are represented by the following general formula (15).

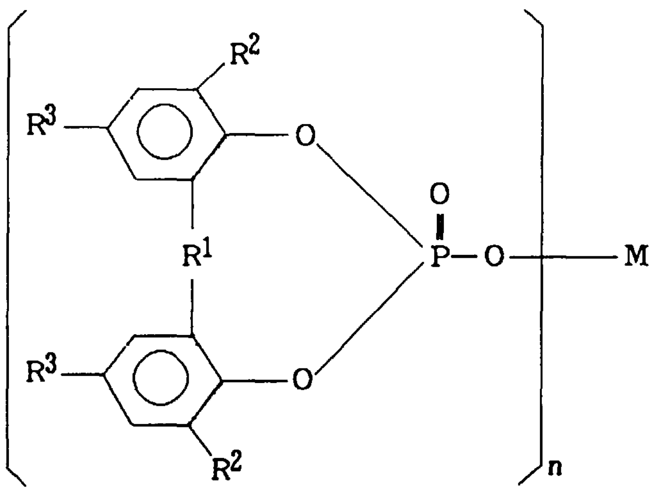

...... (15)

in which $R^1$ denotes oxygen atom, sulfur atom or a hydrocarbon group having 1 - 10 carbon atoms, $R^2$ and $R^3$ denote each hydrogen atom or a hydrocarbon group having 1 - 10 carbon atoms, wherein $R^2$ and $R^3$ may be identical with or fifferent from each other or any of the pairs $R^2$ with another $R^2$, $R^3$ with another $R^3$ and both $R^2$ with $R^3$ may be bound together to form a ring, M is a metal having a valency of 1 - 3 and n is an integer of 1 - 3.

Concrete examples of the compound represented by the general formula (15) include sodium 2.2'-methylene-bis(4,6-di-t-butylphenyl) phosphate, sodium 2,2'-ethylidene-bis(4,6-di-t-butylphenyl) phosphate, lithium 2,2'-methylene-bis(4,6-di-t-butylphenyl) phosphate, lithium 2,2'-ethylidene-bis(4,6-di-t-butylphenyl) phosphate, sodium 2,2'-ethylidene-bis(4-i-propyl-6-t-butylphenyl) phosphate, lithium 2,2'-methylene-bis(4-methyl-6-t-butylphenyl) phosphate, lithium 2,2'-methylene-bis(4-ethyl-6-t-butylphenyl) phosphate, calcium bis[2,2'-thio-bis(4-methyl-6-t-butylphenyl) phosphate], calcium bis[2,2'-thio-bis(4-ethyl-6-t-butyl-phenyl) phosphate], calcium bis[2,2'-thio-bis(4,6-di-t-butylphenyl) phosphate], magnesium bis[2,2'-thio-bis(4,6-di-t-butylphenyl) phosphate], magnesium bis[2,2'-thio-bis-(4-t-octylphenyl) phosphate], sodium 2,2'-butylidene-bis(4,6-dimethylphenyl) phosphate, sodium 2,2'-butylidene-bis(4,6-di-t-buthylphenyl) phosphate, sodium 2,2'-t-octylmethylene-bis(4,6-dimethylphenyl) phosphate, sodium 2,2'-t-octylmethylene-bis(4,6-di-t-butylphenyl) phosphate, calcium bis[2,2'-methylene-bis(4,6-di-t-butylphenyl) phosphate], magnesium bis[2,2'-methylene-bis(4,6-di-t-butylphenyl) phosphate], barium bis[2,2'-methylene-bis(4,6-di-t-butylphenyl) phosphate], sodium 2,2'-methylene-bis(4-methyl-6-t-butylphenyl) phosphate, sodium 2,2'-methylene-bis(4-ethyl-6-t-butylphenyl) phosphate, sodium (4,4'-dimethyl-6,6'-di-t-butyl-2,2'-bi-phenyl) phosphate, calcium bis[(4,4'-dimethyl-6,6'-di-t-butyl-2,2'-biphenyl) phosphate], sodium 2,2'-ethylidene-bis(4-m-butyl-6-t-butylphenyl) phosphate, sodium 2,2'-methylene-bis(4,6-di-methylphenyl) phosphate, sodium 2,2'-methylene-bis(4,6-di-ethylphenyl) phosphate, potassium 2,2'-ethylidene-bis(4,6-di-t-butylphenyl) phosphate, calcium bis[2,2'-ethylidene-bis(4,6-di-t-butylphenyl) phosphate], magnesium bis[2,2'-ethylidene-bis-(4,6-di-t-butylphenyl) phosphate], barium bis[2,2'-ethylidene-bis(4,6-di-tert-butylphenyl) phosphate], aluminum tris[2,2'-methylene-bis(4,6-di-t-butyl-phenyl) phosphate], aluminum tris[2,2'-ethylidene-bis(4,6-di-t-butylphenyl) phosphate] and mixtures of two or more of them. Among them, sodium 2,2'-methylene-bis(4,6-di-t-butylphenyl) phosphate is preferred.

As preferred nucleating agent (D) based on organophosphate, those represented by the following general formula (16) may be exemplified.

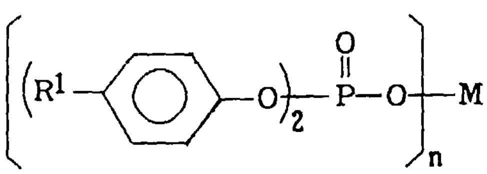

...... (16)

in which $R^1$ denotes hydrogen atom or a hydrocarbon group having 1 - 10 carbon atoms, M is a metal atom having a valency of 1 - 3 and n is an integer of 1 - 3.

Concrete examples of the nucleating agent (D) based on organophosphate represented by the general formula (16) include sodium bis(4-tert-butylphenyl) phosphate, sodium bis(4-methylphenyl) phosphate, sodium bis(4-ethylphenyl) phosphate, sodium bis(4-i-propylphenyl) phosphate, sodium bis(4-tert-butylphenyl) phosphate, sodium bis(4-tert-octylphenyl) phosphate, potassium bis(4-tert-butylphenyl) phosphate, calcium bis(4-tert-butylphenyl) phosphate, magnesium bis(4-tert-butylphenyl) phosphate, lithium bis(4-tert-butylphenyl) phosphate, aluminum bis(4-tert-butylphenyl) phosphate and mixtures of two or more of them. Among them, sodium bis(4-tert-butylphenyl) phosphate is preferred.

As the nucleating agent (D) based on sorbitol, those represented by the following general formula (17) may be exemplified.

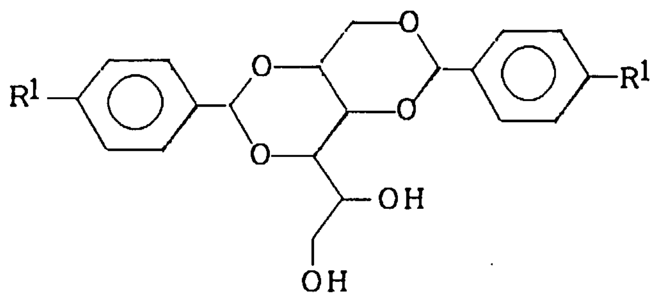

...... (17)

in which the two $R^1$s may be identical with or different from each other and denote each hydrogen atom or a hydrocarbon group having 1 - 10 carbon atoms.

Concrete examples of the nucleating agent based on sorbitol represented by the general formula (17) include 1,3,2,4-dibenzylidene sorbitol, 1,3-benzylidene-2,4-p-methylbenzylidene sorbitol, 1,3-benzylidene-2,4-p-ethylbenzylidene sorbitol, 1,3-p-methylbenzylidene-2,4-benzylidene sorbitol, 1,3-p-ethylbenzylidene-2,4-benzylidene sorbitol, 1,3-p-methylbenzylidene-2,4-p-ethylbenzylidene sorbitol, 1,3-p-ethylbenzylidene-2,4-p-methylbenzylidene sorbitol, 1,3,2,4-di(p-methylbenzylidene) sorbitol, 1,3,2,4-di(p-ethylbenzylidene) sorbitol, 1,3,2,4-di(p-n-propylbenzylidene) sorbitol, 1,3,2,4-di-(p-i-propylbenzylidene) sorbitol, 1,3,2,4-di(p-n-butylbenzylidene) sorbitol, 1,3,2,4-di(p-s-butylbenzylidene) sorbitol, 1,3,2,4-di(p-t-butylbenzylidene) sorbitol, 1,3,2,4-di(2',4'-dimethylbenzylidene) sorbitol, 1,3,2,4-di(p-methoxybenzylidene) sorbitol, 1,3,2,4-di(p-ethoxybenzylidene) sorbitol, 1,3-benzylidene-2,4-p-chlorobenzylidene sorbitol, 1,3-p-chlorobenzylidene-2,4-benzylidene sorbitol, 1,3-p-chlorobenzylidene-2,4-p-methylbenzylidene sorbitol, 1,3-p-chlorobenzylidene-2,4-p-ethylbenzylidene sorbitol, 1,3-p-methylbenzylidene-2,4-p-chlorobenzylidene sorbitol, 1,3-p-ethylbenzylidene-2,4-p-chlorobenzylidene sorbitol, 1,3,2,4-di(p-chlorobenzylidene) sorbitol and mixtures of two or more of them. Among them, 1,3,2,4-dibenzylidene sorbitol, 1,3,2,4-di(p-methylbenzylidene) sorbitol, 1,3,2,4-di(p-ethylbenzylidene) sorbitol, 1,3-p-chlorobenzylidene-2,4-p-methylbenzylidene sorbitol, 1,3,2,4-di(p-chlorobenzylidene) sorbitol and mixtures of two or more of them are preferred.

It is particularly preferable to add 0.1 - 5 parts by weight and, most preferably, to add 0.1 - 2 parts by weight of the nucleating agent (D) based on sorbitol to 100 parts by weight of the sum of the components (A) and (B).

As the nucleating agent (D), there may be employed, further, metal salts of aromatic carboxylic acids such as aluminum benzoate, aluminum p-tert-butyl benzoate, metal salts of aliphatic carbozylic acids, such as sodium adipate, and metal salts of heterocyclic carboxylic acids, such as sodium thiophenecarboxylate and sodium pyrrolecarboxylate. Also, inorganic nucleating agents, such as talc, may be employed.

For each ingredient to be used according to the present invention, every corresponding substance can be used so long as the material properties of the formed product obtained therewith are within a generally acceptable range, wherein such a substance as bringing about a product in which material properties are all within the favorable range is preferred. However, those substances which bring about material properties for certain parameters within the favorable range while others being out of such favorable range though within a generally acceptable range may also be used favorably.

In the copolymer composition according to the present invention, various additives may, on requirement, also be incorporated, such as other resins, a tackifier, weather resistant agent, heat stabilizer, antistatic agent, antislipping agent, antiblocking agent, lubricant, pigments, dyestuffs, plasticizers, an antiaging agent, hydrochloric acid-absorber and antioxydant. For other resins, polypropylene and elastomers based on styrene (for example, SEBS, SBR and hydrogenated products of them) may be exemplified.

The copolymer composition according to the present invention can be produced by known methods, for example, those given below:

1) A method in which the components (A) and (B) are mechanically blended or melt-kneaded together with other components to be blended on requirement, by means of, for example, an extruder or a kneader.

2) A method in which the components (A), (B) and others to be blended on requirement are dissolved in a suitable solvent (for example, hydrocarbons, such as hexane, heptane, decane, cyclohexane, benzene, toluene and

xylene), whereupon the solvent is removed from the resulting solution.

3) A method in which each of the components (A), (B) and others to be blended on requirement is dissolved in a suitable solvent and the resulting solutions are brought together to form a mixed solution, from which the solvent is removed.

4) A method in which the above methods 1) to 3) are incorporated in combination.

It is also possible to prepare the compound according to the present invention by first producing the ethylenic copolymer (A) and the ethylenic polymer (B) through copolymerization or polymerization, each in a plurality of reaction steps of different reaction conditions in one and the same reactor or in different reactors and, then, blending the resulting ethylenic copolymer (A) and the ethylenic polymer (B) together with other optional components in a mechanical way or by melt blending them or dissolving them in a suitable solvent followed by removal of the solvent.

The composition according to the present invention brings about formed products which exhibit moderate extensible elasticity and adhesive property and are superior in the transparency, strength, blocking resistance and formability, so that they have better balance between the properties. Further, a superior durable anti-fogging property can be attaind when an anti-fogging agent (C) is incorporated therein. Moreover, no emission of chlorine occurs upon incineration of the formed articles produced from the copolymer composition according to the present invention, since it has no content of chlorine.

While the composition according to the present invention can be used widely as the material for producing formed products which require an extensible elasticity, ability for adhering onto various surfaces, transparency, strength, restorability from strain, blocking resistance, formability and anti-fogging and durable anti-fogging property, the composition is especially adapted as the material for sheets, films, pipes and tubes (hoses), since it can afford to attain superior performances in the transparency, strength, ability for restoring from strain, formability and durable fogging resistance together with a proper extensible flexibility and pronounced improvement in the strain restorability. Concretely, it can find favorite applications for material of sheets and films for agricultural and industrial uses and for packagings, such as wrapping film, stretchable film and shrinkable film; material of sheets for packaging and so on; material for pipes and tubes (hoses). Among them, special preference is given for application to films and sheets for packaging heavy weight articles. They may be used also for the material for blow molded products, such as blown infusion bags and blown bottles, for injection molded products, such as tearing-off caps and household articles, for fibers and for large molded products obtained by rotational molding.

The films and sheets according to the present invention are produced from the copolymer composition based on ethylene according to the present invention. Concrete examples of such films and sheets include those for agricultural uses, for industrial uses and for packaging uses, such as wrapping films, stretchable films, shrinkable films and packaging sheets. These films and sheets may be used for packaging bags, such as standardized bags, packaging bags for heavy articles, such as heavy packaging bags, original sheet for lamination, sugar bags, bags for oily products, for watery products and for food products and medical infusion bags as well as for agricultural uses. They can be used especially for packaging heavy weight articles.

The thickness of the films may usually be in the range of 5 - 150 $\mu$m and that of the sheets may usually be in the range of 150 - 3,000$\mu$m. These films and sheets can be produced by known forming techniques, for example, inflation molding, T-die extrusion and calendering. For the inflation molding, usual air-cooling inflation molding, two step air-cooling inflation molding, high speed inflation molding and water-cooling inflation molding may be employed.

The resulting film or sheet has an adequate extensible flexibility and ability for adhering onto various surfaces and are superior in the transparency, strength, strain restorability, blocking resistance and durable fogging resistance. It does not show surface tackiness. It does not suffer from bleeding out of the anti-fogging agent (C) and the nucleating agent (D) and is superior in the stable forming performance without showing any bleeding out of the anti-fogging agent (C) and the nucleating agent (D) from the resulting film or sheet.

The films and sheets according to the present invention can serve for practical use in a form of single layer product as such or in a form of multi-layered product by laminating with one or more layers of other material, such as nylon, polyester or the like, or by laminating on a base board.

The pipes and tubes according to the present invention are produced from the copolymer composition based on ethylene described above in a form of hollow cylindrical product. Concrete examples thereof include shrincable tube, tubes for laying in a line and tubes for medical uses.

The tubes and pipes according to the present invention have an adequate extensible flexibility and ability for adhering onto various surfaces and are superior in the transparency, strength, strain restorability and durable fogging resistance. They are superior also in the blocking resistance and show no surface tackiness. They do not suffer from bleeding out of the anti-fogging agent (C) and nucleating agent (D) and are superior in the stable forming performance without showing bleeding out of the anti-fogging agent (C) and the nucleating agent (D) from the resulting formed product, such as pipes and tubes.

As described above, the copolymer composition based on ethylene brings about due to the content of a definite

ethylenic copolymer (A) and ethylenic polymer (B) an adequate extensible flexibility and ability for adhering various surfaces and has a balanced properties as being superior in the transparency, strength, strain restorability, blocking resistance and processibility. When an anti-fogging agent is incorporated in the composition, the effect of fogging resistance is maintained for a long period of time and is thus a durable fogging resistance is attained. Due to the exclusion of any chlorine content, the copolymer composition based on ethylene according to the present invention avoids any chlorine emission upon incineration of the spent or worn formed product made thereof.

The films and sheets according to the present invention have, due to the above-described nature of the composition from which the formed products are produced, a better balance among the material properties, such as proper extensible flexibility and ability for adhering onto various surfaces together with superior performances in the transparency, strength, ability for restoring from strain and blocking resistance. When an anti-fogging agent is incorporated therein, the effect of fogging resistance is maintained for a long period of time and, thus, a superior durable fogging resistance is attained.

The pipes and tubes according to the present invention have, due to the above-described nature of the composition from which the formed products are produced, a better balance among the material properties, such as proper extensible flexibility and ability for adhering onto various surfaces together with superior performances in the transparency, strength, ability for restoring from strain and blocking resistance. When an anti-fogging agent is incorporated therein, the effect of fogging resistance is maintained for a long period of time and, thus, a superior durable fogging resistance is attained.

## THE BEST MODE FOR EMBODYING THE INVENTION

Below, the present invention will be described by way of Examples, wherein such Examples should never be understood as restricting the present invention in any respect. In the Examples, testing methods for determining the material properties as given below are employed:

《 Impact Strength of Film 》

Using a test sample of a thickness of 30 µm, the impact strength was determined on a pendulum impact tester for film (Film Impact Tester of Toyo Seiki Seisaku-Sho, Ltd.).

《 Strain Restorability》

A film sample of 80 mm length and 10 mm width is cut from a film and stretched longitudinally at 23 °C until a 100 % elongation of the distance between two gauge lines marked on the sample film at a distance of 40 mm is reached. This stretched state is maintaied for 10 minutes before being relieved, whereupon the remaining strain after 60 minutes is observed.

《 Fogging Resistance and Durable Fogging Resistance 》

A sample film is placed over a 200 ml beaker filled with 50 ml of warm water of 70 °C to cover its open mouth, whereupon the so-covered beaker is stored once in a refrigerator of a temperature of 5°C for 1 hour, before it is examined for the fogging resistance according to the evaluation criterion given below.

On the other hand, a sample film which has been subjected to a weathering treatment in SUNSHINE Weather-meter under raining condition for 200 hours is placed over a 200 ml beaker filled with 50 ml of warm water of 70 °C to cover its open mouth, whereupon the so-covered beaker is stored once in a refrigerator of a temperature of 5°C for 1 hour, before it is examined for the durable anti-fogging property according to the evaluation criterion given below.

○ Film is not fogged and the beaker inside can be seen clearly.
X Film is fogged and the beaker inside cannot be seen clearly

《 Stability of blown Balloon》

A test copolymer composition is blow molded on a 30 mm extruder provided at its outlet with a blow molding inflation die and the stability of the resulting blown balloon is evaluated by the following evaluation criterion:

○ Balloon is not broken and is stable during the inflation molding.
X Balloon fluctuates and may even be broken during the inflation molding.

POLYMERIZATION EXAMPLE 1

《 Production of Ethylene/Styrene Copolymer》

A five liter reactor made of stainless steel equipped with a pressure gauge, a catalyst dropping funnel and a stirrer, which had been purged with nitrogen gas sufficiently, was charged with 1,500 ml of toluene and 17.5 ml of styrene, wherupon ethylene was compressedly introduced thereinto under a pressure of 0.29 MPa (3 kgf/$cm^2$, gauge), while agitating the liquid charge, and the temperature was elevated to 50°C . Then, the dropping funnel was supplied with 15 mmol of methylaluminoxane (as 10 wt. % toluene solution; obtained from TOSOH AKZO K.K.) and 0.05 mmol (as 0.01 mM toluene solution) of (tert-butylamido)dimethyl(tetramethyl- $\eta$ $^5$-cyclopentadienyl)silanetitanium dichloride to drop them into the reacion mixture by a compressed nitrogen gas boosting. The polymerization was effected by supplying ethylene continuously to the reactor so as to maintain the internal pressure at 0.49 MPa (5 kgf/$cm^2$, gauge) while maintaining the internal temperature at 60°C.

After a 15 minutes' reaction duration, 50 ml of isobutyl alcohol were added thereto to terminate the polymerization.

Then the pressure of the reaction system was relieved, whereupon 1250 ml of isobutyl alcohol and 50 ml of aqueous hydrogen chloride were added to the reaction liquor and the mixture was further agitated at 80 °C for 30 minutes. The reaction liquor containing isobutyl alcohol was transferred to a separating funnel and was rinsed twice each with 1250 ml of water, before oil/water separation was effected. Then, the oil phase was poured into 15 liters of methanol to cause the product polymer to precipitate out. The precipitated polymer product was dried under vacuum at 130 °C for 12 hours, whereby 115 g of an ethylenic copolymer (A-1) having a styrene content of 2.9 mole % and an intrinsic viscosity [$\eta$ ] of 2.01 dl/g were obtained.

Further ethylenic copolymers (B-1) and (C-1) were produced in the same way as above except that the amount of styrene was altered and the polymerization was effected at a temperature of 60 - 70°C. Also, an ethylenic copolymer (D-1) was produced in the same way as above except that the catalyst was changed to isopropylidenebis(indenyl)zirconium dichloride. The material properties of the resulting copolymers are recited in Table 1 below.

POLYMERIZATION EXAMPLE 2

《 Production of Ethylene/$\alpha$ -olefin Copolymer 》

10 kg of a silica product which had been dried at 250°C for 10 hours were suspended in 154 liters of toluene and the suspension was cooled to 0°C . Thereto were added dropwise 57.5 liters of a solution of methylaluminoxane in toluene (Al content = 1.33 Mol/l) over a period of 1 hour. During this, the temperature of the system was maintained at 0 °C . The reaction was continued for further 30 minutes at 0 °C , whereupon the temperature was raised to 95°C over a period of 1.5 hours and the reaction was kept at this temperature for further 20 hours. Then, the temperature was lowered down to 60°C and the supernatant liquid was removed by decantation. The separated solids were washed twice with toluene and were re-suspended in 100 liters of toluene. To this suspension, 16.8 liters of a solution of bis(1-methyl-3-n-butylcyclopentadienyl)zirconium di-chloride in toluene (Zr content = 27.0 mMol/l) were added dropwise over a period of 30 minutes at a temperature of 80 °C , whereupon the reaction was continued at 80 °C for further 2 hours. Then, the supernatant liquid was removed and the separated solids were washed twice with hexane to obtain a solid catalyst containing 3.5 mg of zirconium per gram.

To 87 liters of hexane containing 2.5 moles of triisobutylaluminum, 260 g of 1-hexene and 870 g of the above solid catalyst were added and a preliminary polymerization of ethylene was effected at 35 °C for 5 hours, whereby a prepolymerized catalyst having 10 g of prepolymerized polyethylene per gram of the solid catalyst was obtained.

Using a fluidized bed continuous gas phase polymerization apparatus, copolymerization of ethylene with 1-hexene was carried out at a polymerization temperature of 75 °C under a total pressure of 1.76 MPa (18 kgf/$cm^2$, gauge). During this, the prepolymerized catalyst obtained as above was supplied continuously to the apparatus at a rate of 0.15 mmol/hr of zirconium (calculated as elementary zirconium) and 10 mmol/hr of triisobutylaluminum, while supplying thereto continuously ethylene, 1-hexene, hydrogen and nitrogen so as to maintain a constant gas composition during the polymerization (gas composition: 1-hexene/ethylene = 0.034, hydrogen/ethylene = $1.7\times10^{-4}$, ethylene conc. = 20 %). The yield of the resulting ethylenic copolymer (A-2) was 5.8 kg/hr.

A further ethylenic copolymer (B-2) was produced in the same manner as above, except that the supply rate of 1-hexene was changed. The material properties of the resulting products are recited in Table 1 below. The density of the copolymer (B-2) was found to be 0.908 g/$cm^3$ and its melt flow rate (190 °C ) was 1.15 g/10 min.

Table 1

| Copolymer | Comonomer | Comonomer Cont. (mole %) | Degree of Crystall. (%) | [η] (dl/g) |
|---|---|---|---|---|
| A-1 | Styrene | 2.9 | 31 | 2.01 |
| A-2 | 1-hexene | 4.8 | 41 | 1.94 |
| B-1 | Styrene | 0.5 | 52 | 1.08 |
| B-2 | 1-hexene | 1.4 | 58 | 1.12 |
| C-1 | Styrene | 2.0 | 36 | 1.22 |
| D-1 | Styrene | 2.7 | 33 | 1.62 |

EXAMPLE 1

The ethylenic copolymers (A-1) and (B-1) were blended in a weight proportion of 60/40. To 100 parts by weight of the so-obtained copolymer composition based on ethylene, 2 parts by weight of diglycerin sesquilaurate (HLB = 6.3), 0.3 part by weight of polyoxyethylene(n=5) lauryl ether (HLB = 10.8) and 0.1 part by weight of lauryl diethanolamine (HLB = 6.4) as anti-fogging agent, 0.4 part by weight of a partial metal salt of rosin (15 mole % of potassium and 15 mole % of sodium) as nucleating agent and 0.1 part by weight of calcium stearate, 0.1 part of IRGANOX 1010 (trademark, a product of Ciba Geigy) and 0.1 part by weight of IRGANOX 168 (trademark, a product of Ciba Geigy) as stabilizer were added. The anti-fogging agent had an HLB of 6.9 as the total of the agent. The resulting mixture was melt-kneaded, before being pelletized.

From this pelletized resin composition, a film of a thickness of 30 μm was produced by an inflation molding using a monoaxial extruder of 20 mm ∅ , L/D = 26, provided with a die of 25 mm∅ with a single slit air ring, 0.7 mm lip width, at an air flow rate of 90 l/min., an extrusion rate of 9 g/min., blow ratio of 1.8 and a towing speed of 2.4 m/min. at a processing temperature of 200°C. The test results of this film are given in Table 2 below.

EAMPLES 2 -4

Films were produced in the same manner as in Example 1, except that the copolymers given in Table 2 were used for the ethylenic copolymer. The material properties of the so-obtained films are recited in Table 2.

COMPARATIVE EXAMPLE 1

A film was produced in the same manner as in Example 1, except that ethylenic copolymers (A-2) and (B-2) having no content of aromatic vinyl compound were used as the ethylenic copolymer. The material properties of the resulting film are recited in Table 2.

COMPARATIVE EXAMPLE 2

A film was produed in the same manner as in Example 1, except that an ethylenic copolymer (C-3) was used solely. The material properties of the resulting film are recited in Table 2.

EXAMPLES 5 - 7

A film was produced in the same manner as in each of Examples 1 - 3, respectively, except that 0.2 part by weight of 1,3,2,4-di(p-methylbenzylidene)sorbitol [GELOL MD (trademark) of Shin Nippon Yuka K.K.] was used instead of using 0.4 part by weight of partial metal salt of rosin. The material properties of the resulting film are recited in Table 2.

Table 2

| | Example | | | Comp. Example | |
|---|---|---|---|---|---|
| | 1 | 2 | 3 | 1 | 2 |
| Copolymer | | | | | |
| A-1 | 60 | 60 | | | |
| A-2 | | | 60 | 60 | |
| B-1 | 40 | | 40 | | |
| B-2 | | 40 | | 40 | |
| C-1 | | | | | 100 |
| D-1 | | | | | |
| Arom. vinyl compound | exist | exist | exist | absent | exist |
| Crystallinity ratio | 0.60 | 0.53 | 0.79 | 0.71 | - |
| Intrisic viscosity ratio | 1.86 | 1.79 | 1.80 | 1.73 | - |
| Film | | | | | |
| Impact str. (kg·cm/cm) | NB [1] >8500 | NB >8500 | NB >8500 | NB >8500 | 7100 |
| Strain restorability (%) | 12 | 14 | 18 | 23 | 17 |
| Anti-fogging | ○ | ○ | ○ | ○ | ○ |
| Durable anti-fogging | ○ | ○ | ○ | × | ○ |
| Formability: Stability of Balloon | ○ | ○ | ○ | ○ | × |

Note: 1): NB = not broken

Table 2 (cont.)

| | Example | | | |
|---|---|---|---|---|
| | 4 | 5 | 6 | 7 |
| Copolymer | | | | |
| A-1 | | 60 | 60 | |
| A-2 | | | | 60 |
| B-1 | 40 | 40 | | 40 |
| B-2 | | | 40 | |
| C-1 | | | | |
| D-1 | 60 | | | |
| Arom. vinyl compound | exist | exist | exist | exist |
| Crystallinity ratio | 0.63 | 0.60 | 0.53 | 0.79 |
| Intrisic viscosity ratio | 1.50 | 1.86 | 1.79 | 1.80 |
| Film | | | | |
| Impact str. (kg·cm/cm) | NB [1] >8500 | NB >8500 | NB >8500 | NB >8500 |
| Strain restorability (%) | 13 | 12 | 14 | 18 |
| Anti-fogging | ○ | ○ | ○ | ○ |
| Durable anti-fogging | ○ | ○ | ○ | ○ |
| Formability: Stability of Balloon | ○ | ○ | ○ | ○ |

Note: 1): NB = not broken

INDUSTRIAL APPLICABILITY

The composition according to the present invention can widely be used for materials of formed articles requiring extensible flexibility, ability for adhering onto various surfaces, transparency, strength, strain restorability, blocking resistance, formability, fogging resistance and durable fogging resistance. It is superior in the transparency, strength, strain restorability, blocking resistance, formability and durable fogging resistance, so that it can be used favorably as the

material of films, sheets, pipes and tubes (hoses).

The film or sheet according to the present invention is made from the above-mentioned copolymer composition based on ethylene, concrete examples of which include films and sheets for agricultural and industrial uses and for packaging uses, such as wrapping films, stretchable films and shrinkable films and packaging sheets. These films and sheets can also be used for standardized bags, packagings for heavy weight articles, for example, heavy bag, original sheet for lamination, sugar bag, packaging bags for oily products, for watery products and for food products, medical infusion bag and agricultural materials. They can be used especially favorably for packaging heavy weight articles.

## Claims

**1.** A copolymer composition based on ethylene, comprising

(A) 10 - 90 % by weight of a copolymer of ethylene with an aromatic vinyl compound and/or an $\alpha$ - olefin having 3 - 20 carbon atoms, which has a degree of crystallinity not lower than 10 % but less than 90 % and an intrinsic viscosity [$\eta_A$] of 1 - 10 dl/g, determined in decahydronaphthalene at 135°C , and

(B) 10 - 90 % by weight of a homopolymer of ethylene or a copolymer of ethylene with an aromatic vinyl compound and/or an $\alpha$ -olefin having 3 - 20 carbon atoms, which has a degree of crystallinity higher than 10 % but not higher than 90 % and an intrinsic viscosity [$\eta_B$] of 0.1 - 2 dl/g, determined in decahydronaphthalene at 135 °C ,

wherein either one or both of the above ethylenic copolymer (A) and the ethylenic polymer (B) have the copolymerized aromatic vinyl compound and wherein the ratio of the degree of crystallinity of the ethylenic copolymer (A) to that of the ethylenic polymer (B) [degree of crystallinity of (A)/that of (B)] is less than 1 and the ratio of the intrinsic viscosity of the ethylenic copolymer (A) to that of the ethylenic polymer (B) [ [$\eta_A$]/[$\eta_B$] ] is greater than 1.

**2.** A composition as claimed in Claim 1, wherein the content of the aromatic vinyl compound in the ethylenic copolymer (A) is 1.4 - 10 mole %.

**3.** A composition as claimed in Claim 1 or 2, wherein the ethylenic polymer (B) is a high density polyethylene which is a homopolymer of ethylene or a copolymer of ethylene/$\alpha$ -olefin and which has a density higher than 0.93 $g/cm^3$ but not higher than 0.97 $g/cm^3$.

**4.** A composition as claimed in Claim 1 or 2, wherein the ethylenic polymer (B) is a copolymer of ethylene with an aromatic vinyl compound and/or an $\alpha$ - olefin having 3 - 20 carbon atoms, in which the content of the aromatic vinyl compound is in the range of 0.05 - 1.4 mole %.

**5.** A composition as claimed in Claim 1 or 2, wherein the ethylenic polymer (B) is a linear low density polyethylene which is composed of a copolymer of ethylene with an $\alpha$ -olefin having 3 - 8 carbon atoms and which has a density in the range of 0.86 - 0.93 $g/cm^3$.

**6.** A copolymer composition based on ethylene, comprising

(A1) 10 - 90 % by weight of a copolymer of ethylene with an aromatic vinyl compound and/or an $\alpha$ - olefin having 3 - 20 carbon atoms, which has a degree of crystallinity of 10 - 45 % and an intrinsic viscosity [$\eta_{A1}$] of 1 - 10 dl/g, determined in decahydronaphthalene at 135 °C, and

(B1) 10 - 90 % by weight of a copolymer of ethylene with an aromatic vinyl compound and/or an $\alpha$ - olefin having 3 - 20 carbon atoms, which has a degree of crystallinity of 35 - 70 % and an intrinsic viscosity [$\eta_{B1}$] of 0.1 - 2 dl/g, determined in decahydronaphthalene at 135 °C ,

wherein either one or both of the above ethylenic copolymer (A1) and the ethylenic copolymer (B1) have the copolymerized aromatic vinyl compound and wherein the ratio of the degree of crystallinity of the ethylenic copolymer (A1) to that of the ethylenic copolymer (B1) [degree of crystallinity of (A1)/that of (B1)] is less than 1 and the ratio of the intrinsic viscosity of the ethylenic copolymer (A1) to that of the ethylenic copolymer (B1) [ [$\eta_{A1}$]/ [$\eta_{B1}$] ] is greater than 1.

**7.** A composition as claimed in Claim 6, wherein the content of the aromatic vinyl compound in the ethylenic copolymer (A1) is 1.4 - 10 mole %.

8. A composition as claimed in Claim 6 or 7, wherein the content of the aromatic vinyl compound in the ethylenic copolymer (B1) is 0.05 - 1.4 mole %.

9. A composition as claimed in either one of Claims 6 to 8, wherein the ethyhlenic copolymer (A1) is a copolymer of ethylene with an aromatic vinyl compound and the ethylenic copolymer (B1) is a copolymer of ethylene with an aromatic vinyl compound.

10. A composition as claimed in either one of Claims 6 to 8, wherein the ethyhlenic copolymer (A1) is a copolymer of ethylene with an $\alpha$ -olefin and the ethylenic copolymer (B1) is a copolymer of ethylene with an aromatic vinyl compound.

11. A composition as claimed in either one of Claims 6 to 10, wherein the content of the ethylenic copolymer (A1) is in the range of 30 - 70 % by weight and the content of the ethylenic copolymer (B1) is in the range of 70 - 30 % by weight.

12. A copolymer composition based on ethylene, comprising

(A2) 10 - 90 % by weight of a copolymer of ethylene with an aromatic vinyl compound, which has a degree of crystallinity of 10 - 45 % and an intrinsic viscosity $[\eta_{A2}]$ of 1 - 10 dl/g, determined in decahydronaphthalene at 135 °C , and

(B2) 10 - 90 % by weight of a homopolymer of ethylene or a copolymer of ethylene with an $\alpha$ -olefin having 3 - 20 carbon atoms, which has a degree of crystallinity of 35 - 70 % and an intrinsic viscosity $[\eta_{B2}]$ of 0.1 - 2 dl/g, determined in decahydronaphthalene at 135 °C ,

wherein the ratio of the degree of crystallinity of the ethylenic copolymer (A2) to that of the ethylenic polymer (B2) [degree of crystallinity of (A2)/that of (B2)] is less than 1 and the ratio of the intrinsic viscosity of the ethylenic copolymer (A2) to that of the ethylenic polymer (B2) [ $[\eta_{A2}]/[\eta_{B2}]$ ] is greater than 1.

13. A composition as claimed in Claim 12, wherein the content of the aromatic vinyl compound in the ethylenic copolymer (A2) is 1.4 - 10 mole %.

14. A composition as claimed in Claim 12 or 13, wherein the ethylenic polymer (B2) is a high density polyethylene which is a homopolymer of ethylene and which has a density of higher than 0.93 $g/cm^3$ and not higher than 0.97 $g/cm^3$.

15. A composition as claimed in Claim 12 or 13, wherein the ethylenic polymer (B2) is a linear low density polyethylene which is composed of an ethylene/$\alpha$-olefin copolymer having an $\alpha$ -olefin content of 3 - 10 mole % and which has a density in the range of 0.86 - 0.93 $g/cm^3$.

16. A composition as claimed in either one of Claims 12 to 15, wherein the content of the ethylenic copolymer (A2) is in the range of 10 - 40 % by weight and the content of the ethylenic polymer (B2) is in the range of 60 - 90 % by weight.

17. A composition as claimed in either one of Claims 1 to 16, which comprises an anti-fogging agent (C) in an amount of 0.5 - 10 parts by weight per 100 parts by weight of the sum of the ethylenic copolymer (A) and the ethylenic polymer (B).

18. A composition as claimed in Claim 17, wherein the anti-fogging agent (C) is a nonionic surfactant or a mixture of nonionic surfactants.

19. A composition as claimed in Claim 18, wherein the nonionic surfactant or the mixture of nonionic surfactants has an HLB of 5 - 10.

20. A composition as claimed in either one of Claims 1 to 19, which comprises a nucleating agent (D) in an amount of 0.01 - 10 parts by weight per 100 parts by weight of the sum of the ethylenic copolymer (A) and the ethylenic polymer (B).

21. A formed product made of the composition as claimed in either one of Claims 1 to 20.

**22.** A formed product as claimed in Claim 21, wherein the product is film, sheet, pipe or tube.

**23.** A formed product as claimed in Claim 21 or 22, wherein the formed product is for packaging heavy weight articles.

# INTERNATIONAL SEARCH REPORT

International application No.
PCT/JP97/03783

**A. CLASSIFICATION OF SUBJECT MATTER**

Int. $Cl^6$ C08L23/08

According to International Patent Classification (IPC) or to both national classification and IPC

**B. FIELDS SEARCHED**

Minimum documentation searched (classification system followed by classification symbols)

Int. $Cl^6$ C08L23/08, C08F25/08

Documentation searched other than minimum documentation to the extent that such documents are included in the fields searched

Electronic data base consulted during the international search (name of data base and, where practicable, search terms used)

WPI/L, CAS online (CA file & Registry file)

**C. DOCUMENTS CONSIDERED TO BE RELEVANT**

| Category* | Citation of document, with indication, where appropriate, of the relevant passages | Relevant to claim No. |
|---|---|---|
| A | JP, 7-196861, A (Nippon Petrochemicals Co., Ltd.), August 1, 1995 (01. 08. 95), Claims; Tables 1 to 4 (Family: none) | 1 - 23 |
| A | JP, 6-136196, A (Mitsui Petrochemical Industries, Ltd.), May 17, 1994 (17. 05. 94), Claims; Tables 1, 2 (Family: none) | 1 - 23 |
| A | JP, 48-34233, A (Toyo Cloth Co., Ltd.), May 17, 1973 (17. 05. 73), Claims (Family: none) | 1 - 23 |

☐ Further documents are listed in the continuation of Box C.　☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| January 13, 1998 (13. 01. 98) | January 27, 1998 (27. 01. 98) |
| Name and mailing address of the ISA/ Japanese Patent Office | Authorized officer |
| Facsimile No. | Telephone No. |

Form PCT/ISA/210 (second sheet) (July 1992)